# EUROPEAN PATENT APPLICATION

(11) **EP 4 793 151 A2**
(43) Date of publication of application: **19.08.2026**
(21) Application number: 26158867.7
(22) Date of filing: 16.02.2026
(51) Int. Cl.: B62J 1/00

(54) **ADJUSTABLE SADDLE AND METHODS OF MANUFACTURE**

(30) Priority: 15.02.2025 US 202563759087 P
(71) Applicant: Petty, Jon A., Saint George, Utah 84790 (US)
(72) Inventor: Petty, Jon A., Saint George, Utah 84790 (US)
(74) Representative: HGF

(57) **Abstract**

A method of manufacturing a bicycle saddle may include obtaining saddle measurements pertinent to a specific rider, and using the saddle measurements to additively manufacture a saddle base having a first saddle half and a second saddle half. The method may further include additively manufacturing the saddle base may include positioning the second saddle half relative to the first saddle half as indicated by the saddle measurements.

## Description

### CROSS REFERENCE TO RELATED APPLICATIONS

The present application claims the benefit of U.S. Provisional Patent Application Serial No. 63/759,087, filed on February 15, 2025 and entitled ADJUSTABLE SADDLE AND METHODS OF MANUFACTURE, which is incorporated by reference as though set forth herein in its entirety.

### TECHNICAL FIELD

The present disclosure relates to adjustable saddles. More specifically, the present disclosure relates to an adjustable saddle that supports the ischial tuberosities, ischiopubic rami, and nearby regions of those who use the adjustable saddle.

### BACKGROUND

Saddle seats may be used in a variety of applications including but not limited to: chairs, sit/stand chairs, stationary exercise equipment, bicycles, scooters, motorcycles, motorized vehicles, and in various other applications where an individual may desire to assume a seated, or at least partially seated, position. Although the adjustable saddle design disclosed herein is described in the context of bicycle use, it will be understood that the adjustable saddle design disclosed herein may also be used in any other suitable applications where an individual may desire to assume a seated, or at least partially seated, position.

The conventional single platform saddle design is commonly used on bicycles and other equipment throughout the world. These conventional single platform bicycle saddles include a forward protruding horn that exerts pressure on soft tissue, arteries, veins, and associated nerves often resulting in numbness, pain, and/or erectile dysfunction in individuals. Conventional single platform saddles do not provide specific support for the ischial tuberosities, ischiopubic rami, and nearby regions of those who use single platform bicycle saddles. Additionally, conventional single platform saddles do not adjust to variations in the size and shape of ischiopubic rami of different individuals.

Accordingly, adjustable saddle designs that adequately support the ischial tuberosities, ischiopubic rami, and nearby regions of individuals with varying sizes and shapes of ischiopubic rami may result in a more comfortable ride that avoids soft tissue abrasion, numbness, pain, and/or erectile dysfunction.

### SUMMARY

The various systems and methods of the present disclosure have been developed in response to the present state of the art, and in particular, in response to the problems and needs in the art that have not yet been fully solved by currently available adjustable saddle and methods of manufacture.

In some embodiments, a method of manufacturing a bicycle saddle may include obtaining saddle measurements pertinent to a specific rider, and using the saddle measurements to additively manufacture a saddle base having a first saddle half and a second saddle half. The method may further include additively manufacturing the saddle base may include positioning the second saddle half relative to the first saddle half as indicated by the saddle measurements.

In the method of any preceding paragraph, the method may further include adjusting components of an adjustable saddle relative to each other to accommodate a rider to create an adjusted saddle, wherein obtaining the saddle measurements may include obtaining the saddle measurements from the adjusted saddle.

In the method of any preceding paragraph, additively manufacturing the saddle base may further include forming a mounting bracket integrally with the first saddle half and the second saddle half, wherein the mounting bracket includes, a front support rib extending across a width of a front portion of the saddle base, a middle support rib extending across a width of a middle portion of the saddle base, and one or more back support ribs extending across a width of a back portion of the saddle base.

In the method of any preceding paragraph, obtaining the saddle measurements may include identifying one or more of a front spacing, a rear spacing, and a saddle angle.

In the method of any preceding paragraph, obtaining the saddle measurements may include obtaining a sit bone impression by seating the specific rider on a compressible material and using a measurement obtained from the sit bone impression to obtain an approximate sit bone width for the specific rider.

In the method of any preceding paragraph, obtaining the saddle measurements may further include obtaining additional information from the specific rider including at least one of: a preferred riding position, a bike application type, a specific morphology, a medical condition, and a gender, and cross-referencing the approximate sit bone width with the additional information to arrive at recommended saddle measurements.

In some embodiments, a method of manufacturing a bicycle saddle may include obtaining saddle measurements pertinent to a specific rider, subtractively manufacturing a custom wing from a custom wing blank based on the saddle measurements, and mounting a first saddle half and a second saddle half to the custom wing so that the bicycle saddle may match the saddle measurements.

In the method of any preceding paragraph, the method may further include adjusting components of an adjustable saddle relative to each other to accommodate a rider to create an adjusted saddle, wherein obtaining the saddle measurements may include obtaining the saddle measurements from the adjusted saddle.

In the method of any preceding paragraph, the method may further include, prior to subtractively manufacturing the custom wing, using the saddle measurements to select the custom wing blank from a plurality of differently sized custom wing blanks.

In the method of any preceding paragraph, subtractively manufacturing the custom wing may include forming one or more keyholes in the custom wing, wherein the one or more keyholes may be positioned to establish locations for the first saddle half and the second saddle half relative to the custom wing.

In the method of any preceding paragraph, mounting the first saddle half and the second saddle half to the custom wing may include engaging one or more connection features of the first saddle half with corresponding keyholes in the custom wing, and engaging one or more connection features of the second saddle half with corresponding keyholes in the custom wing.

In the method of any preceding paragraph, the method may further include positioning a thin hard inner between the custom wing and at least one of the first saddle half and the second saddle half.

In the method of any preceding paragraph, the method may further include securing the first saddle half and the second saddle half to the custom wing using an adhesive.

In some embodiments, a bicycle saddle obtainable by or obtained by the methods provided herein (such as the methods of any preceding paragraph) is provided.

In some embodiments, a bicycle saddle, customized based on adjustments made to an adjustable saddle, may include a first saddle half, a second saddle half, and a mounting bracket configured to support the first saddle half and the second saddle half. The first saddle half, the second saddle half, and the mounting bracket may be formed as a single piece, and the first saddle half and the second saddle half may be asymmetrically positioned across a center plane of the bicycle saddle.

The bicycle saddle of any preceding paragraph, at least one of the first saddle half and the second saddle half may include a raised perimeter extending from a saddle half base, wherein the raised perimeter may be configured to increase rigidity and facilitate proper placement of foam padding.

The bicycle saddle of any preceding paragraph, the mounting bracket may include a front support rib extending across a width of a front portion of the bicycle saddle, a middle support rib extending across a width of a middle portion of the bicycle saddle, and one or more back support ribs extending across a width of a back portion of the bicycle saddle. The front support rib, the middle support rib, and the one or more back support ribs may be configured to inhibit deflection of the bicycle saddle when weight is applied.

The bicycle saddle of any preceding paragraph, the front support rib, the middle support rib, and the one or more back support ribs may be configured to fix positions of the front portion, the middle portion, and the back portion of the bicycle saddle relative to the mounting bracket.

The bicycle saddle of any preceding paragraph, the first saddle half, the second saddle half, and the mounting bracket may be additively manufactured as the single piece.

The bicycle saddle of any preceding paragraph, the first saddle half, the second saddle half, and the mounting bracket may be subtractively manufactured from a custom wing blank based on the adjustments made to the adjustable saddle.

The bicycle saddle of any preceding paragraph, a front spacing between front ends of the first saddle half and the second saddle half and a back spacing between back ends of the first saddle half and the second saddle half may be based on sit bone width measurements and riding position preferences of a specific rider.

These and other features and advantages of the present disclosure will become more fully apparent from the following description and appended claims or may be learned by the practice of the implants, systems, and methods set forth hereinafter.

### BRIEF DESCRIPTION OF THE DRAWINGS

Exemplary embodiments of the present disclosure will become more fully apparent from the following description taken in conjunction with the accompanying drawings. Understanding that these drawings depict only exemplary embodiments and are, therefore, not to be considered limiting of the scope of the present disclosure, the exemplary embodiments of the present disclosure will be described with additional specificity and detail through use of the accompanying drawings
FIG. 1 is an exploded perspective view of an adjustable saddle according to an embodiment of the present disclosure.
FIG. 2A is a perspective view of the adjustable saddle of FIG. 1 in assembled form.
FIG. 2B is a side view of the adjustable saddle of FIG. 2A connected to a seat post.
FIG. 3A is a top view of an adjustable saddle according to an embodiment of the present disclosure.
FIG. 3B is a top view of the adjustable saddle of FIG. 3A in an alternate exemplary adjustment configuration.
FIG. 4A is a top view of the adjustable saddle of FIG. 3A in an alternate exemplary adjustment configuration.
FIG. 4B is a top view of the adjustable saddle of FIG. 3A in an alternate exemplary adjustment configuration.
FIG. 5A is a perspective view of the adjustable saddle of FIG. 2A with the foam padding and seat covers removed.
FIG. 5B is a top view of the adjustable saddle of FIG. 5A.
FIG. 6A is a bottom view of the adjustable saddle of FIG. 5A.
FIG. 6B is a back view of the adjustable saddle of FIG. 5A.
FIG. 7A is a perspective view of a first adjustable saddle and a second adjustable saddle and a wide mounting bracket according to an embodiment of the present disclosure.
FIG. 7B is a bottom perspective view of the first adjustable saddle and the second adjustable saddle of FIG. 7A.
FIG. 8A is a perspective view of the first adjustable saddle of FIG 7A.
FIG. 8B is a bottom perspective view of the adjustable saddle of FIG. 8A.
FIG. 8C is a top view of the adjustable saddle of FIG. 8A.
FIG. 8D is a front view of the adjustable saddle of FIG. 8A.
FIG. 8E is a side view of the adjustable saddle of FIG. 8A.
FIG. 9A is a perspective view of the second adjustable saddle of FIG. 7A.
FIG. 9B is a bottom perspective view of the adjustable saddle of FIG. 9A.
FIG. 9C is a top view of the adjustable saddle of FIG. 9A.
FIG. 9D is a front view of the adjustable saddle of FIG. 9A.
FIG. 9E is a side view of the adjustable saddle of FIG. 9A.
FIG. 10A is a perspective view of the wide mounting bracket of FIG. 7A.
FIG. 10B is a top view of the wide mounting bracket of FIG. 10A.
FIG. 10C is a front view of the wide mounting bracket of FIG. 10A.
FIG. 10D is a side view of the wide mounting bracket of FIG. 10A.
FIG. 10E is a perspective view of a narrow mounting bracket according to an embodiment of the present disclosure.
FIG. 10F is top view of the narrow mounting bracket of FIG. 10E.
FIG. 10G is a front view of the narrow mounting bracket of FIG. 10E.
FIG. 10H is a side view of the narrow mounting bracket of FIG. 10E.
FIG. 11A is a perspective view of a custom saddle base according to an embodiment of the present disclosure.
FIG. 11B is a bottom perspective view of the custom saddle base of FIG. 11A.
FIG. 12A is a top view of the custom saddle base of FIG. 11A.
FIG. 12B is a front view of the custom saddle base of FIG. 11A.
FIG. 12C is a side view of the custom saddle base of FIG. 11A.
FIG. 13A is a perspective view of a custom saddle base and a rear tailpiece according to an embodiment of the present disclosure.
FIG. 13B is a bottom perspective view of the custom saddle base and the rear tailpiece of FIG. 13A.
FIG. 14A is a top view of the custom saddle base and the rear tailpiece of FIG. 13A.
FIG. 14B is a front view of the custom saddle base and the rear tailpiece of FIG. 13A.
FIG. 14C is a side view of the custom saddle base and the rear tailpiece of FIG. 13A.
FIG. 15A is a perspective view of a mounting bracket of the custom saddle base of FIG. 13A according to an embodiment of the present disclosure.
FIG. 15B is a side view of the mounting bracket of FIG. 15A.
FIG. 15C is a top view of the mounting bracket of FIG. 15A.
FIG. 15D is a front view of the mounting bracket of FIG. 15A.
FIG. 16A is a perspective view of the rear tailpiece of FIG. 13A according to an embodiment of the present disclosure.
FIG. 16B is a top view of the rear tailpiece of FIG. 16A.
FIG. 16C is a front view of the rear tailpiece of FIG. 16A.
FIG. 16D is a side view of the rear tailpiece of FIG. 16A.
FIG. 17A is a perspective view of a custom saddle base according to an embodiment of the present disclosure.
FIG. 17B is a bottom perspective view of the custom saddle base of FIG. 17A.
FIG. 17C is a top view of the custom saddle base of FIG. 17A.
FIG. 17D is a front view of the custom saddle base of FIG. 17A.
FIG. 17E is a side view of the custom saddle base of FIG. 17A.
FIG. 18A is a perspective view of a first saddle half of the custom saddle base of FIG. 17A according to an embodiment of the present disclosure.
FIG. 18B is a top view of the first saddle half of FIG. 18A.
FIG. 18C is a front view of the first saddle half of FIG. 18A.
FIG. 18D. is a side view of the first saddle half of FIG. 18A.
FIG. 19A is a perspective view of a second saddle half of the custom saddle base of FIG. 17A according to an embodiment of the present disclosure.
FIG. 19B is a top view of the second saddle half of FIG. 19A.
FIG. 19C is a front view of the second saddle half of FIG. 19A.
FIG. 19D is a side view of the second saddle half of FIG. 19A.
FIG. 20A is a perspective view of a mounting bracket of the custom saddle base of FIG. 17A according to an embodiment of the present disclosure.
FIG. 20B is a side view of the mounting bracket of FIG. 20A.
FIG. 20C is a top view of the mounting bracket of FIG. 20A.
FIG. 20D is a front view of the mounting bracket of FIG. 20A.
FIG. 21A is a perspective view of a custom saddle base according to an embodiment of the present disclosure.
FIG. 21B is a bottom perspective view of the custom saddle base of FIG. 21A.
FIG. 22A is a top view of the custom saddle base of FIG. 21A.
FIG. 22B is a front view of the custom saddle base of FIG. 21A.
FIG. 22C is a side view of the custom saddle base of FIG. 21A.
FIG. 23A is a perspective view of a second saddle half of the custom saddle base of FIG 21A according to an embodiment of the present disclosure.
FIG. 23B is a bottom perspective view of the second saddle half of FIG. 23A.
FIG. 24A is a top view of the second saddle half of FIG. 23A.
FIG. 24B is a front view of the second saddle half of FIG. 23A.
FIG. 24C is a side view of the second saddle half of FIG. 23A.
FIG. 25A is a perspective view of a first saddle half of the custom saddle base of FIG 21A according to an embodiment of the present disclosure.
FIG. 25B is a bottom perspective view of the first saddle half of FIG. 25A.
FIG. 26A is a top view of the first saddle half of FIG. 25A.
FIG. 26B is a front view of the first saddle half of FIG. 25A.
FIG. 26C is a side view of the first saddle half of FIG. 25A.
FIG. 27A is a perspective view of a custom wing of the custom saddle base of FIG. 21A according to an embodiment of the present disclosure.
FIG. 27B is a bottom perspective view of the custom wing of FIG. 27A.
FIG. 28A is a top view of the custom wing of FIG. 27A.
FIG. 28B is a front view of the custom wing of FIG. 27A.
FIG. 28C is a side view of the custom wing of FIG. 27A.
FIG. 29A is a perspective view of a thin hard inner according to an embodiment of the present disclosure.
FIG. 29B is a side view of the thin hard inner of FIG. 29A.
FIG. 29C is a top view of the thin hard inner of FIG. 29A.
FIG. 29D is a front view of the thin hard inner of FIG. 29A.
FIG. 30A is a perspective view of a custom wing blank according to an embodiment of the present disclosure.
FIG. 30B is a bottom perspective view of the custom wing blank of FIG. 30A.
FIG. 31A is a perspective view of a custom wing blank according to an embodiment of the present disclosure.
FIG. 31B is a bottom perspective view of the custom wing blank of FIG. 31A.
FIG. 32A is a perspective view of a custom wing having a wide front portion and a sloped rear portion according to an embodiment of the present disclosure.
FIG. 32B is a bottom perspective view of the custom wing of FIG. 32A.
FIG. 32C is a side view of the custom wing of FIG. 32A.
FIG. 33A is a perspective view of a custom wing having a narrow front portion and a sloped rear portion according to an embodiment of the present disclosure.
FIG. 33B is a bottom perspective view of the custom wing of FIG. 33A.
FIG. 33C is a side view of the custom wing of FIG. 33A.
FIG. 34A is a perspective view of a custom wing having a wide front portion according to an embodiment of the present disclosure.
FIG. 34B is a bottom perspective view of the custom wing of FIG. 34A.
FIG. 34C is a side view of the custom wing of FIG. 34A.
FIG. 35A is a perspective view of a custom wing having a narrow front portion according to an embodiment of the present disclosure.
FIG. 35B is a bottom perspective view of the custom wing of FIG. 35A.
FIG. 35C is a side view of the custom wing of FIG. 35A.
FIG. 36A is a perspective view of a custom wing according to an embodiment of the present disclosure.
FIG. 36B is a bottom perspective view of the custom wing of FIG. 36A.
FIG. 36C is a side view of the custom wing of FIG. 36A.
FIG. 37A is a perspective view of a custom wing according to an embodiment of the present disclosure.
FIG. 37B is a bottom perspective view of the custom wing of FIG. 37A.
FIG. 37C is a side view of the custom wing of FIG. 37A.
FIG. 38A is a perspective view of a custom saddle base including the custom wing of FIG. 36A according to an embodiment of the present disclosure.
FIG. 38B is a bottom perspective view of the custom saddle base of FIG. 38A.
FIG. 38C is a side view of the custom saddle base of FIG. 38A.
FIG. 39A is a perspective view of a custom saddle base including the custom wing of FIG. 37A according to an embodiment of the present disclosure.
FIG. 39B is a bottom perspective view of the custom saddle base of FIG. 39A.
FIG. 39C is a side view of the custom saddle base of FIG. 39A.
FIG. 40A is a perspective view of a long hybrid frame according to an embodiment of the present disclosure.
FIG. 40B is a bottom perspective view of the long hybrid frame of FIG. 40A.
FIG. 40C is a side view of the long hybrid frame of FIG. 40A.
FIG. 41A is a perspective view of an accessory bracket according to an embodiment of the present disclosure.
FIG. 41B is a perspective view of the accessory bracket of FIG. 41A.
FIG. 42A is a perspective view of a short hybrid frame according to an embodiment of the present disclosure.
FIG. 42B is a bottom perspective view of the short hybrid frame of FIG. 42A.
FIG. 42C is a side view of the short hybrid frame of FIG. 42A.
FIG. 43A is a perspective view of a hybrid adjustable assembly according to an embodiment of the present disclosure.
FIG. 43B is a bottom perspective view of the hybrid adjustable assembly of FIG. 43A.
FIG. 43C is a side view of the hybrid adjustable assembly of FIG. 43A.
FIG. 44A is a perspective view of a custom saddle base according to an embodiment of the present disclosure.
FIG. 44B is a bottom perspective view of the custom saddle base of FIG. 44A.
FIG. 44C is a side view of the custom saddle base of FIG. 44A.
FIG. 45A is a perspective view of a custom saddle base according to an embodiment of the present disclosure.
FIG. 45B is a bottom perspective view of the custom saddle base of FIG. 45A.
FIG. 45C is a side view of the custom saddle base of FIG. 45A.
FIG. 46A is a flowchart of a method of adjusting the adjustable saddles of the present disclosure.
FIG. 46B is a flowchart of a method of obtaining recommended adjustment settings for an individual to facilitate an adjustment process.
FIG. 47A is a flowchart of a method of additive manufacturing a custom saddle base based on an adjustment setting for an individual.
FIG. 47B is a flowchart of a method of subtractively manufacturing a custom saddle base based on an adjustment setting for an individual.

It is to be understood that the drawings are for purposes of illustrating the concepts of the present disclosure and may not be drawn to scale. Furthermore, the drawings illustrate exemplary embodiments and do not represent limitations to the scope of the present disclosure.

### DETAILED DESCRIPTION

Exemplary embodiments of the present disclosure will be best understood by reference to the drawings, wherein like parts are designated by like numerals throughout. It will be readily understood that the components of the present disclosure, as generally described and illustrated in the Figures herein, could be arranged and designed in a wide variety of different configurations. Thus, the following more detailed description of the embodiments of the apparatus and method, as represented in the figures, is not intended to limit the scope of the present disclosure, as claimed in this or any other application claiming priority to this application, but is merely representative of exemplary embodiments of the present disclosure.

The phrases "connected to," "coupled to," and "in communication with" refer to any form of interaction between two or more entities, including mechanical, electrical, magnetic, electromagnetic, fluid, and thermal interaction. Two components may be functionally coupled to each other even though they are not in direct contact with each other. The term "abutting" refers to items that are in direct physical contact with each other, although the items may not necessarily be attached together. The phrase "fluid communication" refers to two features that are connected such that a fluid within one feature is able to pass into the other feature.

The word "exemplary" is used herein to mean "serving as an example, instance, or illustration." Any embodiment described herein as "exemplary" is not necessarily to be construed as preferred or advantageous over other embodiments. While the various aspects of the embodiments are presented in drawings, the drawings are not necessarily drawn to scale unless specifically indicated.

The present disclosure is related to U.S. Patent No. 10,118,658, filed on September 14, 2016 and entitled ADJUSTABLE SADDLE, which is incorporated by reference as though set forth herein in its entirety.

The adjustable saddles of the present disclosure may provide enhanced support for the ischial tuberosities, ischiopubic rami, and/or nearby regions of individuals. The adjustable saddles may allow an individual to personalize the position of two independently adjustable saddle halves, each saddle half comprising a plurality of surfaces and contours. In this disclosure, the term "half" is used loosely - each of the saddle halves may optionally include more or less than 50% of the surface area that supports the rider. Each saddle half may be pivotally connected at the front end of the adjustable saddle, which may allow for various width adjustments. Each saddle half may be angularly adjustable at the back end of the adjustable saddle to conform to angular variations in male and female ischiopubic rami. Thus, the rider's pelvic bones may ride atop the saddle halves while the soft tissue of the perineum area is untouched between each saddle half. The resulting saddle configuration may prevent problems such as soft tissue abrasions, numbness, pain, and/or erectile dysfunction for men by eliminating pressure and/or compression of the dorsal artery, veins, and nerves. The resulting saddle configuration may also eliminate pressure on women's mons pubis, clitoris, and urethra.

The adjustable saddles of the present disclosure may be configured as bicycle saddles and may be used with different riding positions in order to change an angle of the pelvis in relation to the adjustable saddle. For example, given an "upright" riding position, a wider saddle adjustment may be desirable. On the other hand, given a more aggressive riding position (e.g., a "lower," or racing riding position) a narrower saddle adjustment may be more desirable. For upright riding positions, a desired saddle width may be chosen to properly support the sit bones. However, more aggressive riding positions may change the pelvis contact points relative to the saddle such that, as the riding angle becomes more aggressive, the saddle may be narrowed to properly support the pelvic structure. Thus, the front area of the saddle may be selected to be as wide as possible to achieve adequate pelvic support, while being as narrow as possible in order to achieve good pedaling dynamics. In aggressive, or stretched riding positions, the saddle contact point may move from the tip of the sit bones forward along the pubic arch to the pubic bone and, depending on the saddle design, the central perineal area may be used for load bearing for both genders. Women typically have a lower pubic arch which may result in higher pressures when riding in aggressive riding positions with a traditional saddle design. In aggressive riding positions, the manner in which pressure from the pubic bone is distributed to the saddle may be important for comfort and damage prevention to critical nerves and soft tissue. The sit bone and pubic bones tend to come together from their widest points into a "V" shape, such that more aggressive riding positions will generally benefit from a narrower saddle adjustment.

Thus, in some embodiments, adjustable saddles of the present disclosure may provide the ability to adjust both the front and rear section of a saddle independently to adapt to a given sit bone width and riding position to achieve maximum comfort. In some embodiments, the adjustable saddles of the present disclosure can be adjusted as wide as possible to achieve pelvic support as well as sufficiently narrow to achieve good pedaling dynamics. For example, in an aggressive triathlon riding position, both the front and rear sections of the adjustable saddle may be adjusted narrowly and angled inward to support the pelvis and pubic bone to minimize soft tissue contact. Conversely, in an upright position, both the front and rear sections can be adjusted wider and angled outward to support the pelvis and sit bones to minimize soft tissue contact. In addition, the rear portion of the saddle may be adjusted to be higher than the front to angle the adjustable saddle downward front-to-back to reduce and/or eliminate pressure on the perineal area and pubic arch, improving comfort and safety.

To estimate a proper saddle width, a calculation may be used according to a distance between the centers of the sit bones and a typical riding position (e.g., upright, slightly bent, moderate, stretched, road race, etc.). As one non-limiting example, if a sit bone width for a cyclist is 120mm, a distance may be added to or subtracted from the 120mm width measurement depending on a desired riding position. In this example, if the rider's preferred riding position is upright, 20mm may be added to the base 120mm, yielding a 140mm saddle width. If the riding style is aggressive road race triathlon, then 20mm could be deducted for a 100mm saddle width measurement. The method may be interpreted slightly differently.

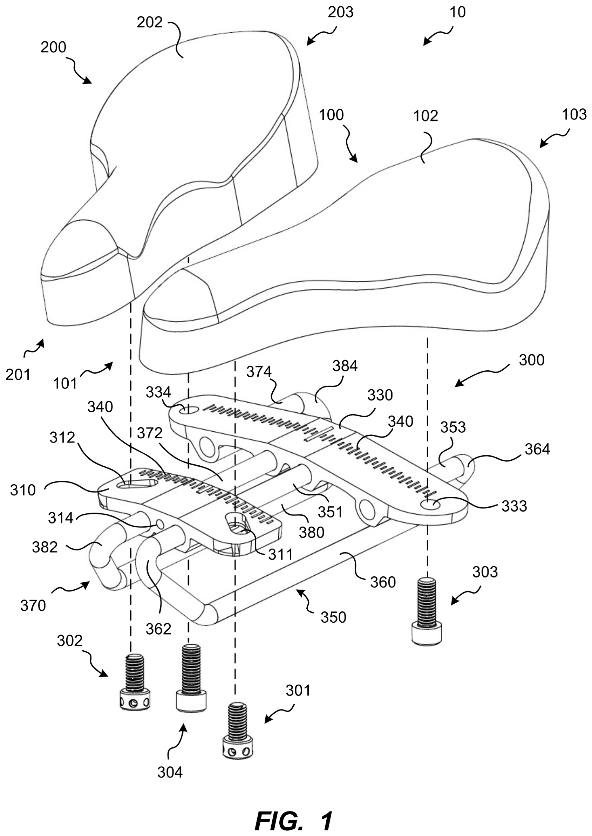

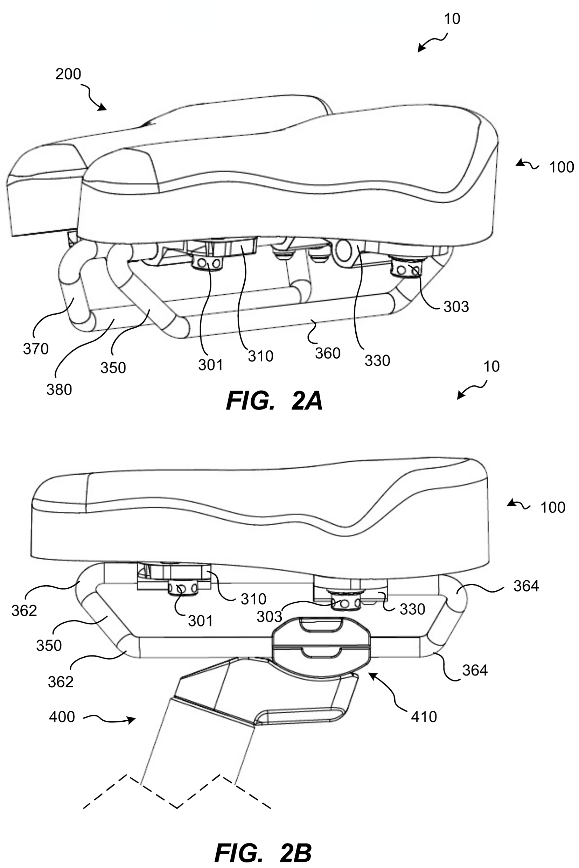

FIGS. 1-6B are various views of an adjustable saddle 10 according to one embodiment of the present disclosure. FIG. 1 is an exploded perspective view of an adjustable saddle 10 according to an embodiment of the present disclosure. FIG. 2A is a perspective view of the adjustable saddle 10 in assembled form. FIG. 2B is a side view of the adjustable saddle 10 connected to a seat post.

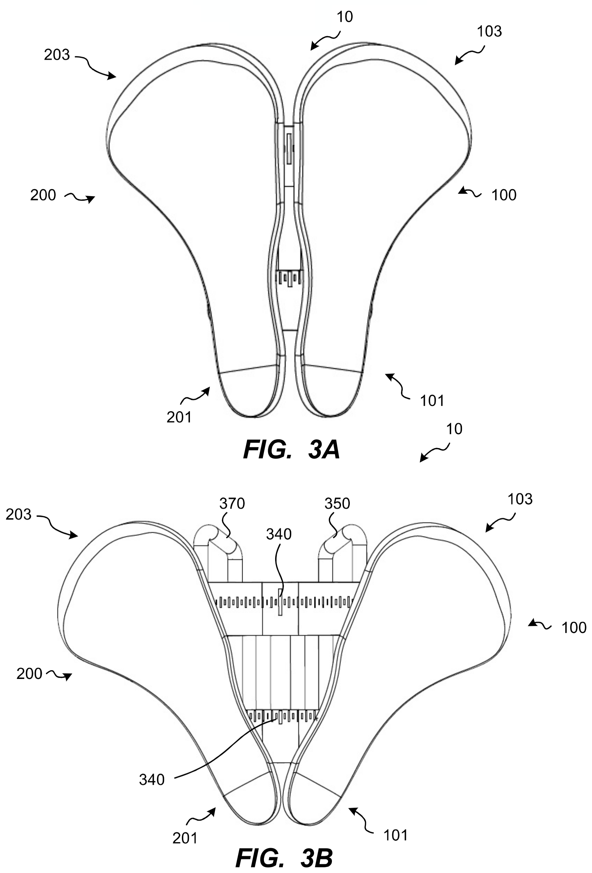

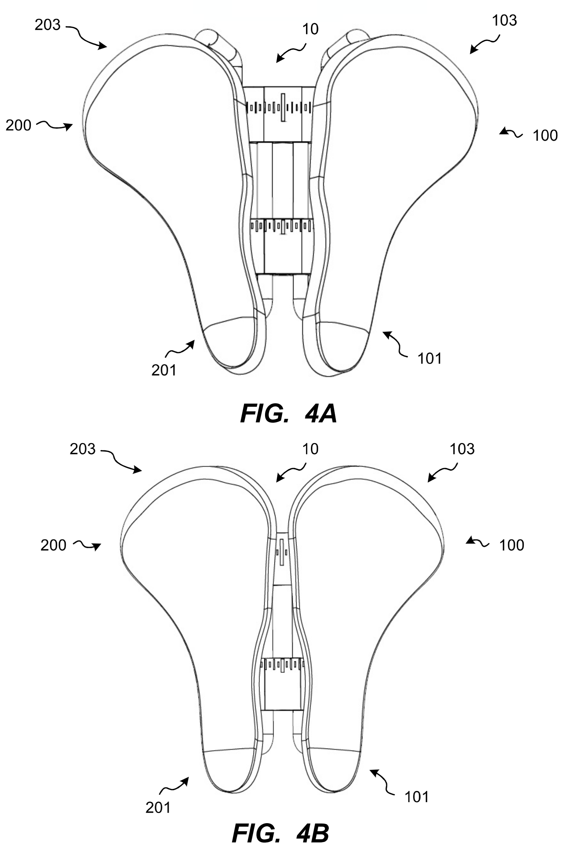

FIG. 3A is a top view of an adjustable saddle 10 according to an embodiment of the present disclosure. FIG. 3B is a top view of the adjustable saddle 10 in an alternate exemplary adjustment configuration. FIG. 4A is a top view of the adjustable saddle 10 in an alternate exemplary adjustment configuration. FIG. 4B is a top view of the adjustable saddle 10 in an alternate exemplary adjustment configuration.

The adjustable saddle 10 may generally include a first saddle half 100 and a second saddle half 200, each topped with foam padding which may be further covered with seat covers 102, 202 to protect the foam padding from weathering, abrasion, and general wear. In at least one embodiment, the seat covers 102, 202 may also include cords (not shown) and/or other attachment features configured to couple the seat covers to their respective saddle halves 100,200, as will be discussed in more detail below.

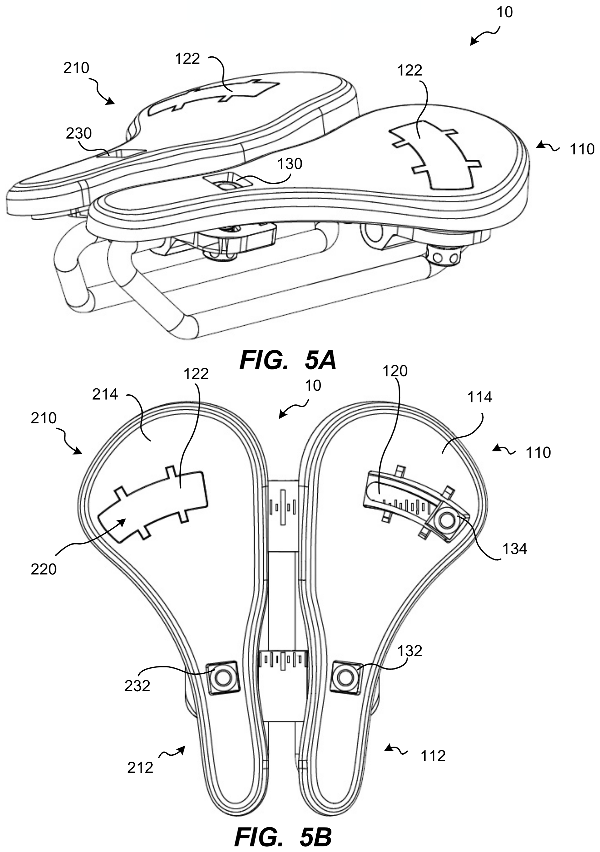

FIG. 5A is a perspective view of the adjustable saddle 10 with the foam padding and seat covers removed. FIG. 5B is a top view of the adjustable saddle 10 with the foam padding and seat covers removed.

Continuing generally with FIGS. 1-2B, the adjustable saddle 10 may include a first saddle half 100, a second saddle half 200, and a chassis 300. The first and second saddle halves 100, 200 may be adjustably attached to the chassis 300 via a first fastener 301, a second fastener 302, a third fastener 303, and a fourth fastener 304. The first and second fasteners 301, 302 may also be referred to herein as front fasteners because they attach the front ends 101, 201 of the saddle halves 100, 200 to the chassis 300. Likewise, the third and fourth fasteners 303, 304 may also be referred to herein as rear fasteners because they attach the back ends 103, 203 of the saddle halves 100, 200 to the chassis 300.

The first, second, third, and fourth fasteners 301, 302, 303, 304 may be any suitable fastener style, including but not limited to: threaded screws, bolts, quick release fasteners, and the like. In one embodiment, at least one of the first, second, third, and fourth fasteners 301, 302, 303, 304 may have a cross drilled head to facilitate rotation of the fastener from the side for easier and quicker operation. For example, an individual (not shown) may use a small elongate tool, such as a 2mm Allen wrench (not shown) to rotate the fastener from the side by inserting one end of the small elongate tool into the cross drilled threaded screws and applying a rotational torque force.

The chassis 300 may generally include a front mounting bracket 310, a rear mounting bracket 330, a first rail 350, and a second rail 370. The front mounting bracket 310 may include a first aperture 311 configured to receive the first fastener 301 to attach the front end 101 of the first saddle half 100 to the front mounting bracket 310, as well as a second aperture 312 configured to receive the second fastener 302 to attach the front end 201 of the second saddle half 200 to the front mounting bracket 310. The front mounting bracket 310 may also include a front attachment aperture 314. Likewise, the rear mounting bracket 330 may include a third aperture 333 configured to receive the third fastener 303 to attach the back end 103 of the first saddle half 100 to the rear mounting bracket 330, as well as a fourth aperture 334 configured to receive the fourth fastener 304 to attach the back end 203 of the second saddle half 200 to the rear mounting bracket 330.

In other embodiments, the front mounting bracket 310 and the rear mounting bracket 330 may be coupled together to form a unified bracket (not shown). The unified bracket may include a front mounting bracket, a rear mounting bracket, and an intermediate piece that couples the front mounting bracket and the rear mounting bracket together. In one embodiment, the front mounting bracket, the rear mounting bracket, and the intermediate piece may be integrally formed together as a single unified bracket. However, in other embodiments, the front mounting bracket, the rear mounting bracket, and the intermediate piece may be configured to detachably couple to each other. In this manner, different intermediate pieces with different lengths, widths, and/or shapes may be used to couple the front mounting bracket to the rear mounting bracket to vary the relative distance between the front mounting bracket and the rear mounting bracket. Moreover, the unified bracket may include any number of apertures that are configured to receive any number of corresponding fasteners to mount the saddle halves 100, 200 to the unified bracket.

In at least one embodiment, the first and second apertures 311, 312 may be angled slots that allow pivotal and translational adjustment of the front ends 101, 201 of the saddle halves 100, 200. However, in other embodiments (not shown), the first and second apertures 311, 312 may be circular shaped holes that allow pivotal adjustment of the front ends 101, 201 of the saddle halves 100, 200. The third and fourth apertures 333, 334 may be circular shaped holes that allow pivotal adjustment of the back ends 103, 203 of the saddle halves 100, 200. However, in other embodiments (not shown), the third and fourth apertures 333, 334, may also be angled slots that allow pivotal and translational adjustment of the back ends 103, 203 of the saddle halves 100, 200. In these embodiments, the addition of angled slots may increase the potential range of motion of the saddle halves 100, 200.

In at least one embodiment, the front mounting bracket 310 and/or the rear mounting bracket 330 may include adjustment markings 340. The adjustment markings 340 may generally indicate the degree to which each saddle half 100, 200 is positionally adjusted with respect to the front mounting bracket 310 and/or the rear mounting bracket 330. In the embodiment shown in FIG. 1, the adjustment markings 340 include simple line markings spaced apart at regular intervals. However, in other embodiments (not shown), the adjustment markings 340 may include numbers or other symbols that indicate various information, such as angular or translational displacement of the saddle halves 100, 200 with respect to the front and rear mounting brackets 310, 330, preferred saddle half 100, 200 positions based on riding style, a rider's personal position preference, etc. The adjustment markings 340 may be formed by any known process including, but not limited to: laser etching, stamping, integral formation during molding/casting, and the like.

In addition to adjustment markings 340, the first rail 350 and/or the second rail 370 may also include additional adjustment markings (not shown) to indicate translational displacement of the chassis 300 with respect to a seat post 400, a seat post mounting bracket 410 (see FIG. 2B), and/or to indicate translational displacement of the front and/or rear mounting brackets 310, 330 with respect to the first and second rails 350, 370. The first rail 350 may have a first lower rail portion 360 and the second rail 370 may have a second lower rail portion 380. The seat post mounting bracket 410 may detachably couple to and/or slidably attach to the first lower rail portion 360 and the second lower rail portion 380 of the first and second rails 350, 370.

The first rail 350 may include at least one first upper rail portion 351 and the second rail 370 may include at least one second upper rail portion 372. The front mounting bracket 310 and/or the rear mounting bracket 330 may be slidably attached to the at least one first upper rail portion 351 of the first rail 350 and the at least one second upper rail portion 372 of the second rail 370. The front and rear mounting brackets 310, 330 may also be held in place along the first and second upper rail portions 351, 372 by any suitable method including simple frictional forces, retainer screws, or the like.

In at least one embodiment, the first rail 350 may include the first upper rail portion 351 and a third upper rail portion 353 and the second rail 370 may include the second upper rail portion 372 and a fourth upper rail portion 374. The front mounting bracket 310 and/or the rear mounting bracket 330 may be slidably attached to the first, second, third, and fourth upper rail portions 351, 372, 353, 374. Likewise, the front and rear mounting brackets 310, 330 may be held in place along the first, second, third, and fourth upper rail portions 351, 372, 353, 374 by any suitable method such as frictional forces, retainer screws, and the like. It is also understood that any or all of the upper rail portions 351, 372, 353, 374 or the lower rail portions 360, 380 may be varied in length to adjust the overall length of the chassis 300 to any desired value.

The first and second rails 350, 370 may include one or more front bends 362, 382 and one or more rear bends 364, 384. The one or more front bends 362, 382 and one or more rear bends 364, 384 may be configured to help absorb mechanical shocks to provide a smoother, more comfortable ride. The one or more front bends 362, 382 and the one or more rear bends 364, 384 may be shaped and/or spaced apart in any manner to vary the clearance, height, width, or angle between any of the upper rail portions 351, 372, 353, 374 and the lower rail portions 360, 380. The one or more front bends 362, 382 and the one or more rear bends 364, 384 may also be shaped and/or spaced apart in any manner to vary the height, forward/backward angle, and side-to-side slope of each saddle half 100, 200. The first and second rails 350, 370 may be formed from any suitable material, or combination of materials including, but not limited to: metals, metal alloys, anodized metals and alloys, steel, titanium, composite materials, carbon fiber, plastic materials, Zytel^{®}, rubber materials, and the like.

FIGS. 3A-4B are various top views of the adjustable saddle 10 in different exemplary adjustment configurations. FIG. 3A shows the adjustable saddle 10 with the back ends 103, 203 of the saddle halves 100, 200 adjusted close together and the front ends 101, 201 of the saddle halves 100, 200 adjusted close together. FIG. 3B shows the adjustable saddle 10 with the back ends 103, 203 of the saddle halves 100, 200 adjusted far apart from each other and the front ends 101, 201 of the saddle halves 100, 200 adjusted close together. FIG. 4A shows the adjustable saddle 10 with the back ends 103, 203 of the saddle halves 100, 200 adjusted far apart from each other and the front ends 101, 201 of the saddle halves 100, 200 adjusted far apart from each other. FIG. 4B shows the adjustable saddle 10 with the back ends 103, 203 of the saddle halves 100, 200 adjusted close together and the front ends 101, 201 of the saddle halves 100, 200 adjusted far apart from each other.

The non-limiting exemplary adjustment configurations shown in FIGS. 3A-4B are for illustration purposes only and it will be understood that the back ends 103, 203 of the saddle halves 100, 200 can assume an infinite number of different positions throughout their adjustment range, and likewise the front ends 101, 201 of the saddle halves 100, 200 can also assume an infinite number of positions throughout their adjustment range. It will also be understood that the size and shape of any of the components of the chassis 300 and the saddle halves 100, 200 may be varied to achieve any saddle half 100, 200 adjustment range/span. For example, the size and shape of the chassis 300 components may be varied to achieve adjustment ranges/spans, including but not limited to: 0-10 cm, 0-15 cm, 0-30 cm, 5-15 cm, 10-20 cm, 15-30 cm, etc.

A wedge tool (not shown) may also be used to help facilitate adjustment of the front ends 101, 201 and the back ends 103, 203 of the saddle halves 100, 200 relative to each other. For example, the wedge tool may have a wedge shape that may be inserted or pressed in between the front ends 101, 201 and/or the back ends 103, 203 of the saddle halves 100, 200. The wedge tool may controllably split apart the saddle halves 100, 200 to achieve a desired spread distance and/or provide one or more reference adjustment angles for the saddle halves 100, 200 during setup of the adjustable saddle 10. In this manner, the wedge tool may be used to help facilitate positional adjustment of the saddle halves 100, 200.

FIGS. 5A-6B show various views of the adjustable saddle 10 with the foam padding and seat covers removed illustrating a first saddle half base 114 and a second saddle half base 214 corresponding to each saddle half 100, 200. The first and second saddle half bases 114, 214 may be formed of one or more rigid materials, including but not limited to: plastics, metals, carbon fiber, Zytel^{®}, composite materials, or the like.

The first and second saddle half bases 114, 214 may include apertures 130, 230 formed in the front ends 112, 212 of the first and second saddle half bases 114, 214. The apertures 130, 230 may be configured to retain and/or couple to suitable retainer nuts 132, 232 placed within the apertures 130, 230. The retainer nuts 132, 232 may be further configured to receive the first and second fasteners 301, 302 by any suitable method, such as complementary threading. In another embodiment (not shown), the apertures 130, 230 formed in the front ends 112, 212 of the first and second saddle half bases 114, 214 may also include angled slots to increase the range of pivotal and/or translational movement of the front ends 112, 212 of the first and second saddle half bases 114, 214.

The first and second saddle half bases 114, 214 may further include a first arcuate adjustment channel 120 and a second arcuate adjustment channel 220 formed in the back ends 110, 210 of the first and second saddle half bases 114, 214. The first arcuate adjustment channel 120 may be configured to receive the third fastener 303 therein. The first saddle half base 114 may be slidably positionable relative to the third fastener 303 positioned within the first arcuate adjustment channel 120 to allow pivotal attachment of the back end 110 of the first saddle half base 114 relative to the rear mounting bracket 330. Likewise, the second arcuate adjustment channel 220 may be configured to receive the fourth fastener 304 therein. The second saddle half base 214 may be slidably positionable relative to the fourth fastener 304 positioned within the second arcuate adjustment channel 220 to allow pivotal attachment of the back end 210 of the second saddle half base 214 to the rear mounting bracket 330.

The first and second arcuate adjustment channels 120, 220 may be configured to retain and/or couple to suitable retainer nuts 134 placed within the arcuate adjustment channels 120, 220. The retainer nuts 134 may be further configured to receive the third and fourth fasteners 303, 304 by any suitable method, such as complementary threading. The first and second arcuate adjustment channels 120, 220 may also be covered with inserts 122 to support and protect foam padding placed on top of the first and second saddle half bases 114, 214.

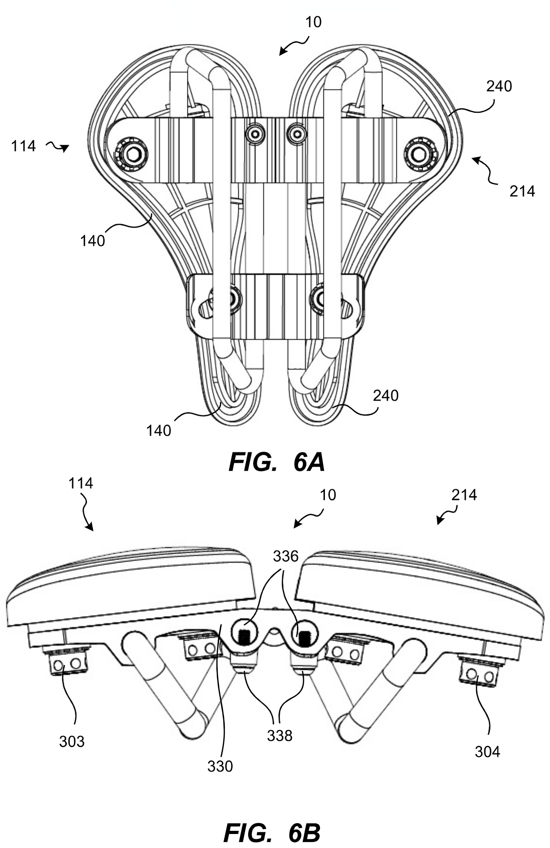

FIG. 6A is a bottom view of the adjustable saddle 10 without seat covers or foam padding. The first and second saddle half bases 114, 214 may include grooves 140, 240 formed around the bottom edge of each saddle half base 114, 214 that may be configured to facilitate coupling of the seat covers 102, 202 and/or their cords (not shown) to the first and second saddle half bases 114, 214 to help hold the seat covers 102, 202 in place.

FIG. 6B is a back view of the adjustable saddle 10 without seat covers or foam padding. The rear mounting bracket 330 may include one or more rear attachment apertures 336 configured to receive one or more attachment accessories. The rear mounting bracket 330 may also include one or more attachment fasteners 338 to couple the one or more attachment accessories to the rear mounting bracket 330 and/or couple the rear mounting bracket 330 to the first and second rails 350, 370.

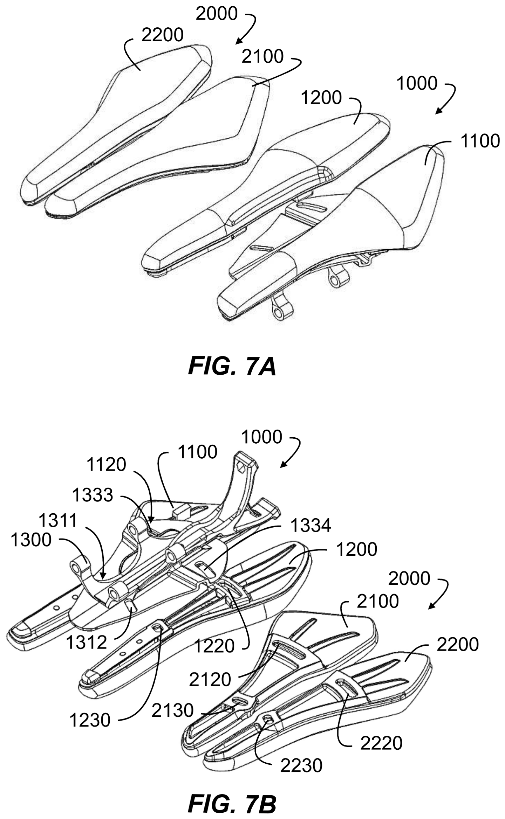

FIG. 7A is a perspective view of a first adjustable saddle 2000 and a second adjustable saddle 1000 and a wide mounting bracket 1300 according to an embodiment of the present disclosure. FIG. 7B is a bottom perspective view of the first adjustable saddle 2000 and the second adjustable saddle 1000. Various parts and/or features of the first adjustable saddle 2000 and the second adjustable saddle 1000 may be identical or similar to their counterparts on the adjustable saddle 10 and/or other adjustable saddle embodiments presented herein; these parts and/or features may not be described again here. All statements made regarding the adjustable saddle 10 may apply to the first adjustable saddle 2000 and the second adjustable saddle 1000 unless they would be contradicted by the differences between the two. Additionally, all statements made regarding the first adjustable saddle 2000 and the second adjustable saddle 1000 may apply to both the first adjustable saddle 2000 and the second adjustable saddle 1000 unless they would be contradicted by the differences between the two.

The first adjustable saddle 2000 may include a first saddle half 2100 and a second saddle half 2200. The first saddle half 2100 and the second saddle half 2200 may be independently adjustable relative to each other to adapt to a given sit bone width and riding position to achieve maximum comfort. The first adjustable saddle 2000 may be configured to be secured to a mounting bracket (such as wide mounting bracket 1300). The wide mounting bracket 1300 may facilitate locking the positions of the first saddle half 2100 and the second saddle half 2200 relative to each other and to the wide mounting bracket 1300.

The second adjustable saddle 1000 may include a first saddle half 1100 and a second saddle half 1200. Similar to the first adjustable saddle 2000, first saddle half 1100 and the second saddle half 1200 may be independently adjustable relative to each other to adapt to a given sit bone width and riding position to achieve maximum comfort. The second adjustable saddle 1000 may be configured to be secured to a wide mounting bracket 1300. The wide mounting bracket 1300 may facilitate locking the positions of the first saddle half 1100 and the second saddle half 1200 relative to each other and to the wide mounting bracket 1300.

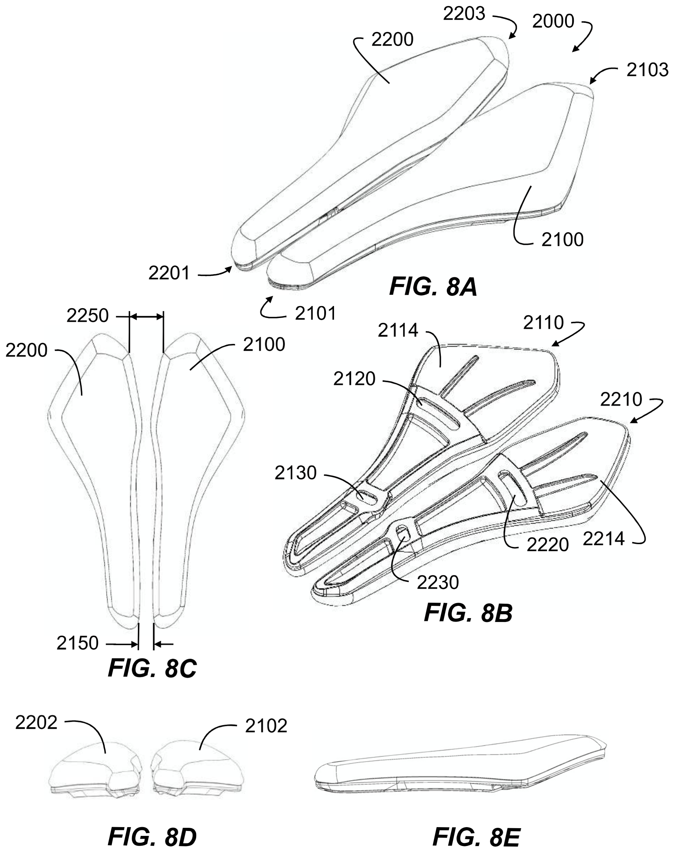

FIG. 8A is a perspective view of the first adjustable saddle 2000, FIG. 8B is a bottom perspective view of the adjustable saddle 2000, FIG. 8C is a top view of the adjustable saddle 2000, FIG. 8D is a front view of the adjustable saddle 2000, and FIG. 8E is a side view of the adjustable saddle 2000. The first saddle half 2100 may include a seat cover 2102, a front end 2101 and a back end 2103. The second saddle half 2200 may include a set cover 2202, a front end 2201 and a back end 2203.

The first adjustable saddle 2000 may include a front spacing 2150 and a back spacing 2250. The front spacing 2150 may be a distance between the front end 2101 of the first saddle half 2100 and the front end 2201 of the second saddle half 2200. The front spacing 2150 may be adjustable to accommodate a rider based on the rider's anatomy, riding positions, preferences, and/or the back spacing 2250. The back spacing 2250 may be a distance between the back end 2103 of the first saddle half 2100 and the back end 2203 of the second saddle half 2200. The back spacing 2250 may be adjustable to accommodate a rider based on the rider's anatomy, riding positions, preferences, and/or the front spacing 2150.

The first saddle half 2100 may further include a first arcuate adjustment channel 2120 and a first aperture 2130 formed on a bottom side of a first saddle half base 2114. The first arcuate adjustment channel 2120 and the first aperture 2130 may be configured to receive a fastener (not shown). The first saddle half base 2114 may be slidably positionable relative to the fastener positioned within the first arcuate adjustment channel 2120 to allow pivotal attachment of the back end 2110 of the first saddle half base 2114 relative to a mounting bracket.

The second saddle half 2200 may further include a second arcuate adjustment channel 2220 and a second aperture 2230 formed on a bottom side of a second saddle half base 2214. The second arcuate adjustment channel 2220 and the second aperture 2230 may be configured to receive a fastener (not shown). The second saddle half base 2214 may be slidably positionable relative to the fastener positioned within the second arcuate adjustment channel 2220 to allow pivotal attachment of the back end 2210 of the second saddle half base 2214 relative to the mounting bracket.

The first and second arcuate adjustment channels 2120, 2220 may be configured to retain and/or couple to suitable retainer nuts (not shown) placed within the arcuate adjustment channels 2120, 2220. The retainer nuts may be further configured to receive the fasteners by any suitable method, such as complementary threading. The first and second apertures 2130, 2230 may be configured to retain and/or couple to suitable retainer nuts (not shown) placed within the first and second apertures 2130, 2230. The retainer nuts may be further configured to receive the fasteners by any suitable method, such as complementary threading.

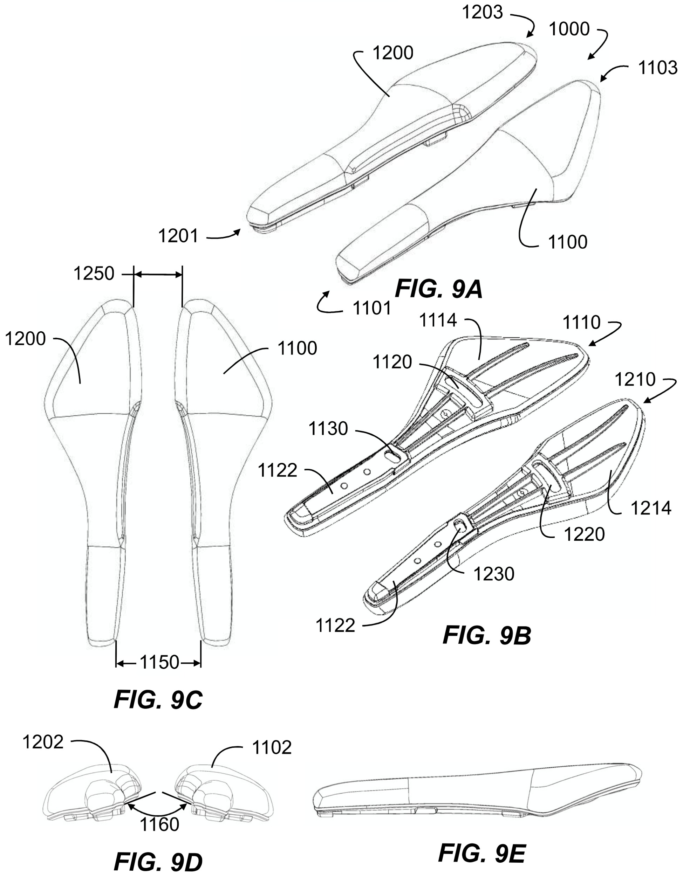

FIG. 9A is a perspective view of the second adjustable saddle 1000, FIG. 9B is a bottom perspective view of the adjustable saddle 1000, FIG. 9C is a top view of the adjustable saddle 1000, FIG. 9D is a front view of the adjustable saddle 1000, and FIG. 9E is a side view of the adjustable saddle 1000. The first saddle half 1100 may include a seat cover 1102, a front end 1101 and a back end 1103. The second saddle half 1200 may include a seat cover 1202, a front end 1201 and a back end 1203.

The second adjustable saddle 1000 may include a front spacing 1150 and a back spacing 1250. The front spacing 1150 may be a distance between the front end 1101 of the first saddle half 1100 and the front end 1201 of the second saddle half 1200. The front spacing 1150 may be adjustable to accommodate a rider based on the rider's anatomy, riding positions, preferences, and/or the back spacing 1250. The back spacing 1250 may be a distance between the back end 1103 of the first saddle half 1100 and the back end 1203 of the second saddle half 1200. The back spacing 1250 may be adjustable to accommodate a rider based on the rider's anatomy, riding positions, preferences, and/or the front spacing 1150.

The second adjustable saddle 1000 may further include a saddle angle 1160. The saddle angle 1160 may be a relative angle between the first saddle half 1100 and the second saddle half 1200. The saddle angle 1160 may be adjustable to accommodate a rider based on the rider's anatomy, riding positions, and/or preferences.

The first saddle half 1100 may further include a first arcuate adjustment channel 1120 and a first aperture 1130 formed on a bottom side of a first saddle half base 1114. The first arcuate adjustment channel 1120 and the first aperture 1130 may be configured to receive a fastener (not shown). The first saddle half base 1114 may be slidably positionable relative to the fastener positioned within the first arcuate adjustment channel 1120 to allow pivotal attachment of the back end 1110 of the first saddle half base 1114 relative to a mounting bracket.

The second saddle half 1200 may further include a second arcuate adjustment channel 1220 and a second aperture 1230 formed on a bottom side of a second saddle half base 1214. The second arcuate adjustment channel 1220 and the second aperture 1230 may be configured to receive a fastener (not shown). The second saddle half base 1214 may be slidably positionable relative to the fastener positioned within the second arcuate adjustment channel 1220 to allow pivotal attachment of the back end 1210 of the second saddle half base 1214 relative to the mounting bracket.

The first and second arcuate adjustment channels 1120, 1220 may be configured to retain and/or couple to suitable retainer nuts (not shown) placed within the arcuate adjustment channels 1120, 1220. The retainer nuts may be further configured to receive the fasteners by any suitable method, such as complementary threading. The first and second apertures 1130, 1230 may be configured to retain and/or couple to suitable retainer nuts (not shown) placed within the first and second apertures 1130, 1230. The retainer nuts may be further configured to receive the fasteners by any suitable method, such as complementary threading.

The first saddle half 1100 and the second saddle half 1200 may each include an insert 1122 configured to provide additional support to the front end 1101 of the first saddle half 1100 and the second front end 1201 of the second saddle half 1200.

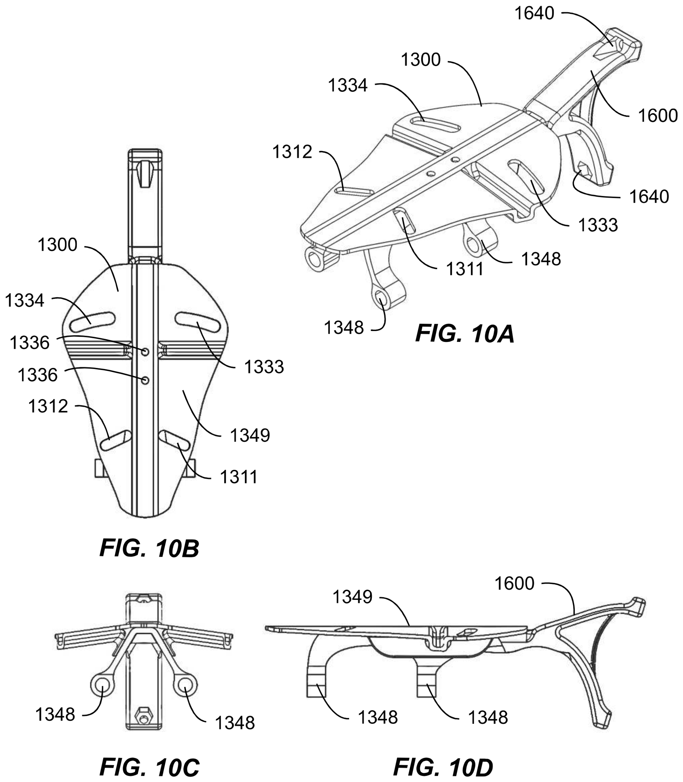

FIG. 10A is a perspective view of the wide mounting bracket 1300, FIG. 10B is a top view of the wide mounting bracket 1300, FIG. 10C is a front view of the wide mounting bracket 1300, and FIG. 10D is a side view of the wide mounting bracket 1300. The wide mounting bracket 1300 may be configured to adjustably receive a first saddle half 1100 (and/or first saddle half 2100) and a second saddle half 1200 (and/or second saddle half 2200) on a top surface 1349, so that the first saddle half 1100 and the second saddle half 1200 may be adjustable relative to each other and relative to the wide mounting bracket 1300. The wide mounting bracket 1300 may further be configured to be coupled to a chassis, thereby facilitating mounting of the second adjustable saddle 1000 (and/or the first adjustable saddle 2000) to a seat post 400.

The wide mounting bracket 1300 may include a first aperture 1311, a second aperture 1312, a third aperture 1333, and a fourth aperture 1334. The apertures 1311, 1312, 1333, 1334 may be configured to receive one or more fasteners configured to mount one the first saddle half 1100 and/or the second saddle half 1200 to the wide mounting bracket 1300.

The first aperture 1311 and the second aperture 1312 may each be configured as an angled slot that may allow pivotal and translational adjustment of the front ends 1101, 1201 of the saddle halves 1100, 1200. The third aperture 1333 and the fourth aperture 1334 may each be configured as an arcuate slot that may allow pivotal and translational adjustment of the back ends 1103, 1203 of the saddle halves 1100, 1200. Alternatively, each of the apertures 1311, 1312, 1333, 1334 may be configured as a generally circular aperture, an angled slot, an arcuate slot, a straight slot, and/or any combination of the preceding.

The wide mounting bracket 1300 may further include one or more attachment features 1348 and one or more locking apertures 1336. The wide mounting bracket 1300 may be configured to slide forward and/or backward relative to the one or more attachment features 1348. The wide mounting bracket 1300 may be positioned relative to the one or more attachment features 1348 to accommodate a rider based on the rider's anatomy, riding positions, and/or preferences. The one or more locking apertures 1336 may each receive a fastener (not shown) configured to secure the position of the wide mounting bracket 1300 relative to the one or more attachment featured 1348.

The attachment features 1348 may be configured to facilitate coupling of the wide mounting bracket 1300 to a chassis, thereby facilitating mounting of the second adjustable saddle 1000 (and/or the first adjustable saddle 2000) to a seat post 400.

The wide mounting bracket 1300 may further be configured to receive a rear tailpiece 1600. The rear tailpiece 1600 may include one or more attachment apertures 1640 configured to receive one or more fasteners. The rear tailpiece 1600 may include various mounting brackets to receive additional attachments, including but not limited to: water bottle brackets, water bottle cages, CO₂ cartridges, toolkits, spare parts, and the like.

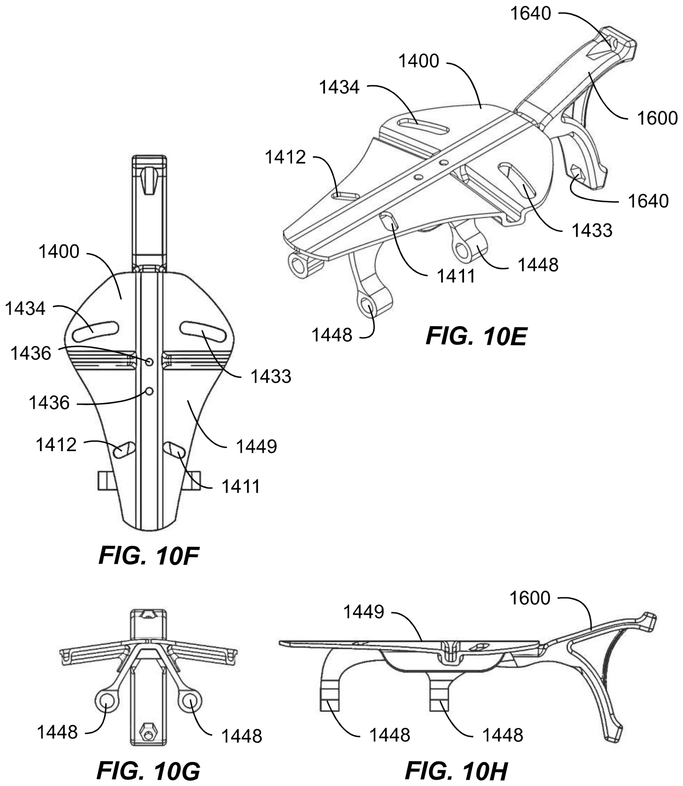

FIG. 10E is a perspective view of a narrow mounting bracket 1400 according to an embodiment of the present disclosure. FIG. 10F is top view of the narrow mounting bracket 1400, FIG. 10G is a front view of the narrow mounting bracket 1400, and FIG. 10H is a side view of the narrow mounting bracket 1400. Various parts and/or features of the narrow mounting bracket 1400 may be identical or similar to their counterparts on the wide mounting bracket 1300 presented herein; these parts and/or features may not be described again here. All statements made regarding the wide mounting bracket 1300 may apply to the narrow mounting bracket 1400 unless they would be contradicted by the differences between the two.

The narrow mounting bracket 1400 may include a first aperture 1411, a second aperture 1412, a third aperture 1433, a fourth aperture 1434, a top surface 1449, one or more locking apertures 1436, and attachment features 1448.

The top surface 1449 may have a narrower profile relative to the top surface 1349. More specifically, a first front portion of the narrow mounting bracket 1400, opposite a rear portion where the rear tailpiece 1600 may be received, may be narrower than a second front portion of the wide mounting bracket 1300. Additionally, or alternatively, the first aperture 1411 may be shorter relative to the first aperture 1311 and the second aperture 1412 may be shorter relative to the second aperture 1312.

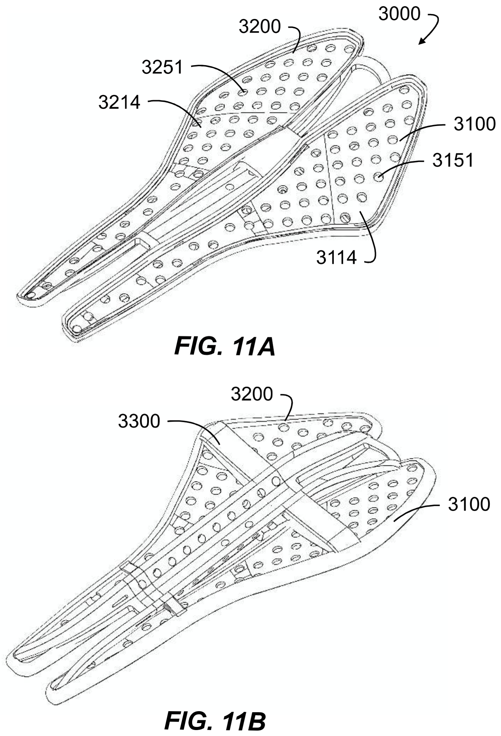

FIG. 11A is a perspective view of a custom saddle base 3000 according to an embodiment of the present disclosure. FIG. 11B is a bottom perspective view of the custom saddle base 3000. Various parts and/or features of the custom saddle base 3000 may be identical or similar to their counterparts on the adjustable saddle 10 and/or other adjustable saddle embodiments presented herein; these parts and/or features may not be described again here. All statements made regarding the adjustable saddle 10 may apply to the custom saddle base 3000 unless they would be contradicted by the differences between the two.

The custom saddle base 3000 may include a first saddle half 3100, a second saddle half 3200, and a mounting bracket 3300. The custom saddle base 3000 may be configured as a monolithic piece, or single piece, with the first saddle half 3100, the second saddle half 3200, and the mounting bracket 3300 incorporated into a single component. The custom saddle base 3000 may be configured to receive a foam padding (not shown) and/or a seat cover (not shown) configured to protect the foam padding from weathering, abrasion, and general wear. The first saddle half 3100 and the second saddle half 3200 may be asymmetrically positioned across a center plane 3148 of the custom saddle base 3000.

The custom saddle base 3000 may be additively manufactured based on adjustments of an adjustable saddle, such as the adjustable saddle 10, the adjustable saddle 1000, and/or the adjustable saddle 2000, that has been adjusted to accommodate a rider based on the rider's anatomy, riding positions, and/or preferences. More specifically, the custom saddle base 3000 may be additively manufactured based on the front spacing 1150 and the back spacing 1250 of the second adjustable saddle 1000, and/or the front spacing 2150 and the back spacing 2250 of the first adjustable saddle 2000. Additionally, or alternatively, the custom saddle base 3000 may be additively manufactured based on the adjustment markings 340 of the adjustable saddle 10.

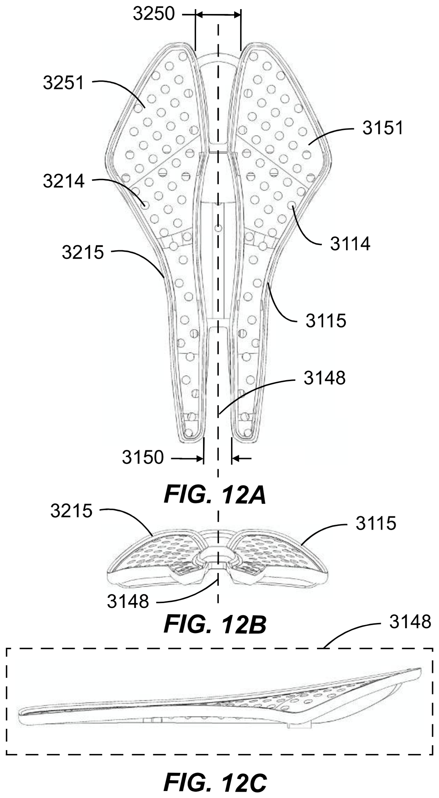

FIG. 12A is a top view of the custom saddle base 3000, FIG. 12B is a front view of the custom saddle base 3000, and FIG. 12C is a side view of the custom saddle base 3000. The custom saddle base 3000 may include a front spacing 3150 and a back spacing 3250. The front spacing 3150 may be generally equal to the front spacing 1150 and/or the front spacing 2150 of an adjustable saddle upon which the custom saddle base 3000 is based. The back spacing 3250 may be generally equal to the back spacing 1250 and/or the back spacing 2250 of an adjustable saddle upon which the custom saddle base 3000 is based.

Additionally, or alternatively, the front spacing 3150 and the back spacing 3250 may be calculated based on a rider' anatomy, riding position, and/or preferences. More specifically, the front spacing 3150 and the back spacing 3250 may be calculated according to a distance between the centers of the sit bones and a typical riding position (e.g., upright, slightly bent, moderate, stretched, road race, etc.).

With a foam padding and a seat cover in place on the custom saddle base 3000, the custom saddle base 3000 may match the same general form, fit, and function as an adjustable saddle upon which the custom saddle base 3000 is based. However, first saddle half 3100 and the second saddle half 3200 of the custom saddle base 3000 may not be adjustable relative to each other, such as is the case with the adjustable saddle 10, the adjustable saddle 1000, and the adjustable saddle 2000.

The first saddle half 3100 may include a first saddle half base 3114, a raised perimeter 3115, and a plurality of base apertures 3151. The first saddle half base 3114 may generally have the same size and shape as a first saddle half base from an adjustable saddle upon which the custom saddle base 3000 is based. For example, the first saddle half base 3114 may generally have the same size and shape as the first saddle half base 114, the first saddle half base 1114, and/or first saddle half base 2114. The foam padding may be bonded to the first saddle half base 3114.

The first saddle half base 3114 may include a raised perimeter 3115. The raised perimeter 3115 may increase the rigidity of the first saddle half 3100 and may facilitate proper placement of the foam padding on the first saddle half base 3114. The raised perimeter 3115 may extend superiorly and/or inferiorly from the first saddle half base 3114.

The plurality of base apertures 3151 may be configured to decrease the weight of the first saddle half 3100. Additionally, or alternatively, the plurality of base apertures 3151 may provide ventilation for the foam padding. The plurality of base apertures 3151 may be arranged throughout the first saddle half base 3114. Alternatively, the plurality of base apertures 3151 may be located within a portion of the first saddle half base 3114. Alternatively, the plurality of base apertures 3151 may be absent from the first saddle half base 3114.

Various parts and/or features of the second saddle half 3200 may be identical or similar to their counterparts on the first saddle half 3100 presented herein; these parts and/or features may not be described again here. All statements made regarding the first saddle half 3100 may apply to the second saddle half 3200 unless they would be contradicted by the differences between the two. The second saddle half 3200 may include a second saddle half base 3214, a raised perimeter 3215, and a plurality of base apertures 3251.

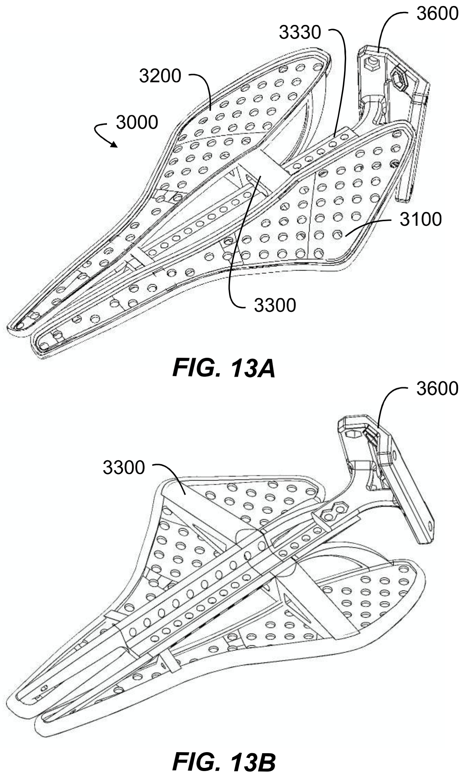

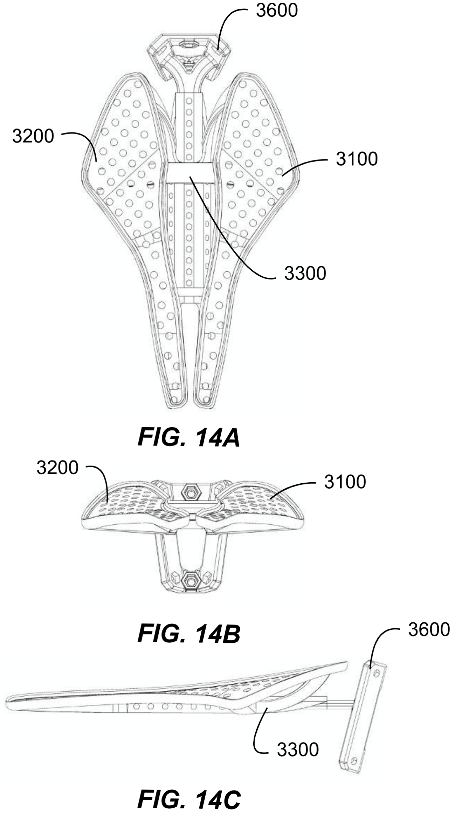

FIG. 13A is a perspective view of a custom saddle base 3000 and a rear tailpiece 3600 according to an embodiment of the present disclosure. FIG. 13B is a bottom perspective view of the custom saddle base 3000 and the rear tailpiece 3600. FIG. 14A is a top view of the custom saddle base 3000 and the rear tailpiece 3600, FIG. 14B is a front view of the custom saddle base 3000 and the rear tailpiece 3600, and FIG. 14C is a side view of the custom saddle base 3000 and the rear tailpiece 3600.

The rear tailpiece 3600 may be configured to attach to a rear mounting bracket 3330 of the custom saddle base 3000. The rear tailpiece 3600 and the mounting bracket 3300 may be configured to receive one or more attachment fasteners (not shown) to secure the rear tailpiece 3600 to the custom saddle base 3000. The one or more attachment fasteners may be a nut and a bolt. Alternatively, the one or more attachment fasteners may be any suitable fastener style, including but not limited to: threaded screws, bolts, quick release fasteners, and the like. The rear tailpiece 3600 may include various mounting brackets for additional attachments, including but not limited to: water bottle brackets, water bottle cages, CO₂ cartridges, toolkits, spare parts, and the like.

The custom saddle base 3000 may be additively manufactured as a single component including the first saddle half 3100, the second saddle half 3200, the mounting bracket 3300, the rear mounting bracket 3330, and the rear tailpiece 3600. Alternatively, the custom saddle base 3000 may be additively manufactured as a single component including the first saddle half 3100, the second saddle half 3200, the mounting bracket 3300, and the rear mounting bracket 3330.

Alternatively, custom saddle base 3000 may be additively manufactured as a single component including the first saddle half 3100 and the second saddle half 3200. The mounting bracket 3300 and the rear mounting bracket 3330 may be injection molded as a single component and attached to the custom saddle base 3000.

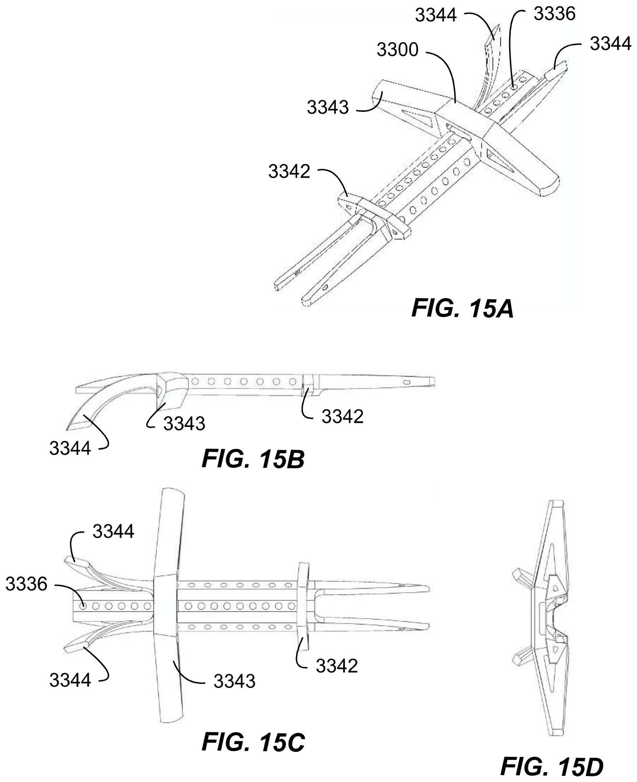

FIG. 15A is a perspective view of a mounting bracket 3300 of the custom saddle base 3000 according to an embodiment of the present disclosure. FIG. 15B is a side view of the mounting bracket 3300, FIG. 15C is a top view of the mounting bracket 3300, and FIG. 15D is a front view of the mounting bracket 3300. The mounting bracket 3300 may be configured to support the first saddle half 3100 and the second saddle half 3200. The mounting bracket 3300 may further be configured to be coupled to a chassis, thereby facilitating mounting of the custom saddle base 3000 to a chassis and/or a seat post 400. The mounting bracket 3300 may be integrally formed with the first saddle half 3100 and the second saddle half 3200.

The mounting bracket 3300 may include one or more rear attachment apertures 3336, a front support rib 3342, a middle support rib 3343, and one or more back support ribs 3344. The rear attachment apertures 3336 may be configured to receive one or more attachment accessories. The rear attachment apertures 3336 may further be configured to receive one or more attachment fasteners (not shown) configured to secure an attachment accessory to the mounting bracket 3300.

The front support rib 3342 may extend a width of a front portion of the custom saddle base 3000 to support the front portion of the custom saddle base 3000. The front support rib 3342 may inhibit deflection of the front portion of the custom saddle base 3000 with a weight applied to the custom saddle base 3000, for example, with a rider sitting on the custom saddle base 3000. Additionally, or alternatively, the front support rib 3342 may fix a position of the front portion of the custom saddle base 3000 relative to the mounting bracket 3300.

The middle support rib 3343 may extend a width of a middle portion of the custom saddle base 3000 to support the middle portion of the custom saddle base 3000. The middle support rib 3343 may inhibit deflection of the middle portion of the custom saddle base 3000 with a weight applied to the custom saddle base 3000, for example, with a rider sitting on the custom saddle base 3000. Additionally, or alternatively, the middle support rib 3343 may fix a position of the middle portion of the custom saddle base 3000 relative to the mounting bracket 3300.

The one or more back support ribs 3344 may extend a width of a back portion of the custom saddle base 3000 to support the back portion of the custom saddle base 3000. The one or more back support ribs 3344 may inhibit deflection of the back portion of the custom saddle base 3000 with a weight applied to the custom saddle base 3000, for example, with a rider sitting on the custom saddle base 3000. Additionally, or alternatively, the one or more back support ribs 3344 may fix a position of the back portion of the custom saddle base 3000 relative to the mounting bracket 3300.

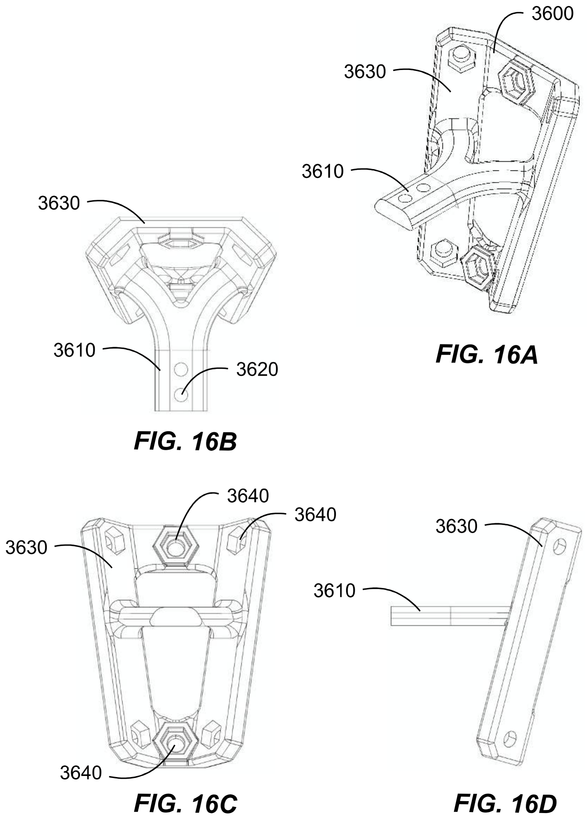

FIG. 16A is a perspective view of the rear tailpiece 3600 according to an embodiment of the present disclosure. FIG. 16B is a top view of the rear tailpiece 3600, FIG. 16C is a front view of the rear tailpiece 3600, and FIG. 16D is a side view of the rear tailpiece 3600. The rear tailpiece 3600 may include a connection portion 3610, one or more connection apertures 3620, an accessory attachment portion 3630, and one more attachment apertures 3640.

The connection portion 3610 may have a size and shape complementary to a back portion of the mounting bracket 3300 to facilitate mounting of the rear tailpiece 3600 to the mounting bracket 3300. The connection portion 3610 may include the one or more connection apertures 3620. The one or more connection apertures 3620 may be configured to receive a fastener configured to secure the rear tailpiece 3600 to the mounting bracket 3300.

The accessory attachment portion 3630 may be sized and shaped to receive additional attachments, including but not limited to: water bottle brackets, water bottle cages, CO₂ cartridges, toolkits, spare parts, and the like. The accessory attachment portion 3630 may include one or more attachment apertures 3640. The one or more attachment apertures 3640 may be configured to receive one or more fasteners (not shown) configured to secure an accessory to the rear tailpiece 3600.

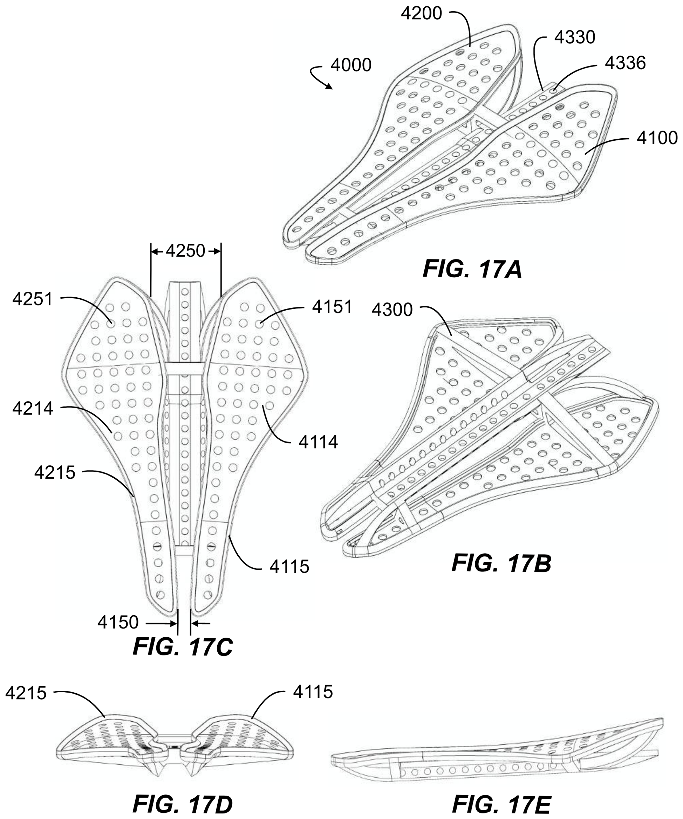

FIG. 17A is a perspective view of a custom saddle base 4000 according to an embodiment of the present disclosure. FIG. 17B is a bottom perspective view of the custom saddle base 4000, FIG. 17C is a top view of the custom saddle base 4000, FIG. 17D is a front view of the custom saddle base 4000, and FIG. 17E is a side view of the custom saddle base 4000.

Various parts and/or features of the custom saddle base 4000 may be identical or similar to their counterparts on the custom saddle base 3000 presented herein; these parts and/or features may not be described again here. All statements made regarding the custom saddle base 3000 may apply to the custom saddle base 4000 unless they would be contradicted by the differences between the two.

The custom saddle base 4000 may include a first saddle half 4100, a second saddle half 4200, and a mounting bracket 4300. The custom saddle base 4000 may be configured as a monolithic piece, or single piece, with the first saddle half 4100, the second saddle half 4200, and the mounting bracket 4300 incorporated into a single component. The custom saddle base 4000 may be configured to receive a foam padding (not shown) and/or a seat cover (not shown) configured to protect the foam padding from weathering, abrasion, and general wear.

The custom saddle base 4000 may be additively manufactured based on adjustments of an adjustable saddle, such as the adjustable saddle 10, the adjustable saddle 1000, and/or the adjustable saddle 2000, that has been adjusted to accommodate a rider based on the rider's anatomy, riding positions, and/or preferences. More specifically, the custom saddle base 4000 may be additively manufactured based on the front spacing 1150 and the back spacing 1250 of the second adjustable saddle 1000, and/or the front spacing 2150 and the back spacing 2250 of the first adjustable saddle 2000. Additionally, or alternatively, the custom saddle base 4000 may be additively manufactured based on the adjustment markings 340 of the adjustable saddle 10.

The custom saddle base 4000 may further include a front spacing 4150 and a back spacing 4250. The front spacing 4150 may be generally equal to the front spacing 1150 and/or the front spacing 2150 of an adjustable saddle upon which the custom saddle base 4000 is based. The back spacing 4250 may be generally equal to the back spacing 1250 and/or the back spacing 2250 of an adjustable saddle upon which the custom saddle base 4000 is based.

Additionally, or alternatively, the front spacing 4150 and the back spacing 4250 may be calculated based on a rider' anatomy, riding position, and/or preferences. More specifically, the front spacing 4150 and the back spacing 4250 may be calculated according to a distance between the centers of the sit bones and a typical riding position (e.g., upright, slightly bent, moderate, stretched, road race, etc.).

With a foam padding and a seat cover in place on the custom saddle base 4000, the custom saddle base 4000 may match the same general form, fit, and function as an adjustable saddle upon which the custom saddle base 4000 is based. However, first saddle half 4100 and the second saddle half 4200 of the custom saddle base 4000 may not be adjustable relative to each other.

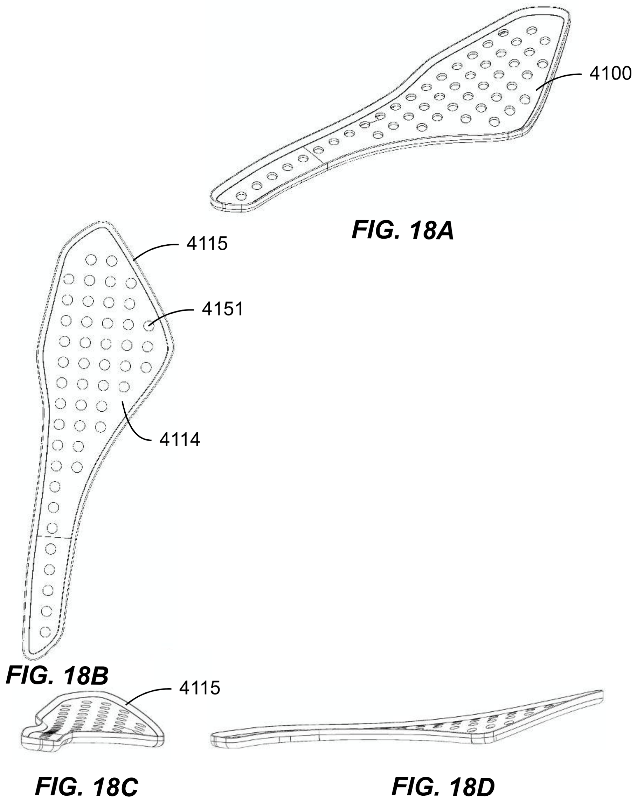

FIG. 18A is a perspective view of a first saddle half 4100 of the custom saddle base 4000 according to an embodiment of the present disclosure. FIG. 18B is a top view of the first saddle half 4100, FIG. 18C is a front view of the first saddle half 4100, and FIG. 18D. is a side view of the first saddle half 4100.

The first saddle half 4100 may include a first saddle half base 4114, a raised perimeter 4115, and a plurality of base apertures 4151. The first saddle half base 4114 may generally have the same size and shape as a first saddle half base from an adjustable saddle upon which the custom saddle base 4000 is based. For example, the first saddle half base 4114 may generally have the same size and shape as the first saddle half base 114, the first saddle half base 1114, and/or first saddle half base 2114. The foam padding may be bonded to the first saddle half base 4114.

The first saddle half base 4114 may include a raised perimeter 4115. The raised perimeter 4115 may increase the rigidity of the first saddle half 4100 and may facilitate proper placement of the foam padding on the first saddle half base 4114. The raised perimeter 4115 may extend superiorly and/or inferiorly from the first saddle half base 4114.

The plurality of base apertures 4151 may be configured to decrease the weight of the first saddle half 4100. Additionally, or alternatively, the plurality of base apertures 4151 may provide ventilation for the foam padding. The plurality of base apertures 4151 may be arranged throughout the first saddle half base 4114. Alternatively, the plurality of base apertures 4151 may be located within a portion of the first saddle half base 4114. Alternatively, the plurality of base apertures 4151 may be absent from the first saddle half base 4114.

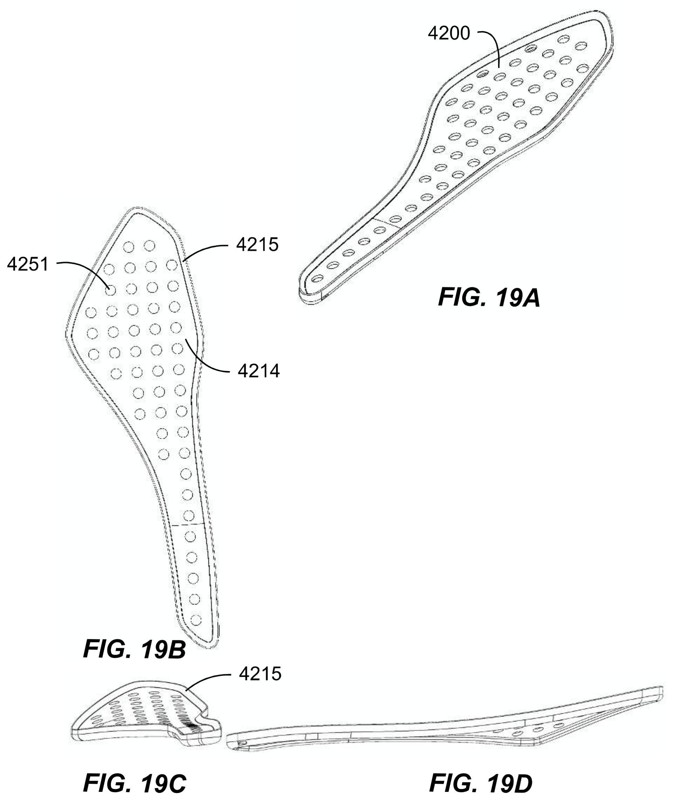

FIG. 19A is a perspective view of a second saddle half 4200 of the custom saddle base 4000 according to an embodiment of the present disclosure. FIG. 19B is a top view of the second saddle half 4200, FIG. 19C is a front view of the second saddle half 4200, and FIG. 19D is a side view of the second saddle half 4200.

Various parts and/or features of the second saddle half 4200 may be identical or similar to their counterparts on the first saddle half 4100 presented herein; these parts and/or features may not be described again here. All statements made regarding the first saddle half 4100 may apply to the second saddle half 4200 unless they would be contradicted by the differences between the two. The second saddle half 4200 may include a second saddle half base 4214, a raised perimeter 4215, and a plurality of base apertures 4251.

The custom saddle base 4000 may be additively manufactured as a single component including the first saddle half 4100, the second saddle half 4200, and the mounting bracket 4300. Alternatively, the custom saddle base 4000 may be additively manufactured as a single component including the first saddle half 4100, the second saddle half 4200, the mounting bracket 4300, and the rear mounting bracket 4330.

Alternatively, custom saddle base 4000 may be additively manufactured as a single component including the first saddle half 4100 and the second saddle half 4200. The mounting bracket 4300 and the rear mounting bracket 4330 may be injection molded as a single component and attached to the custom saddle base 4000.

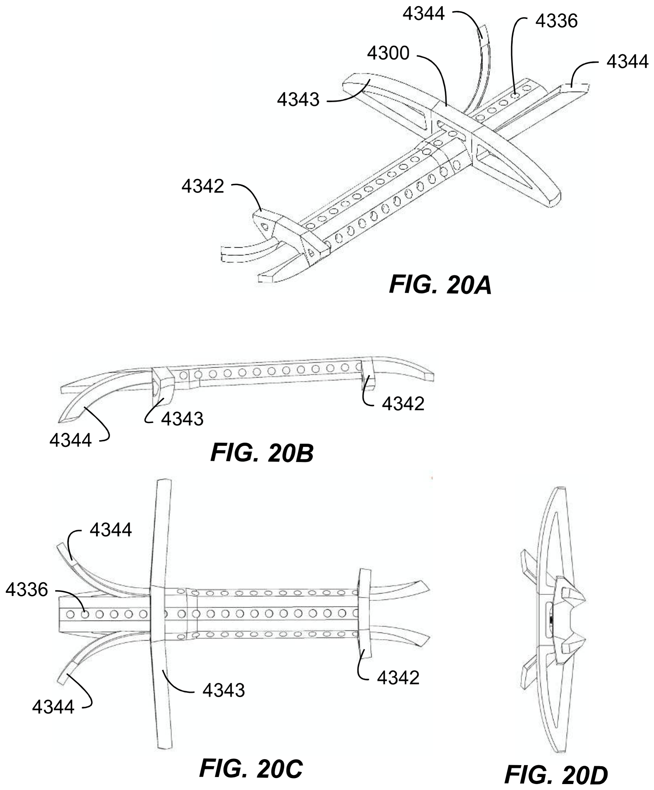

FIG. 20A is a perspective view of a mounting bracket 4300 of the custom saddle base 4000 according to an embodiment of the present disclosure. FIG. 20B is a side view of the mounting bracket 4300, FIG. 20C is a top view of the mounting bracket 4300, and FIG. 20D is a front view of the mounting bracket 4300.

The mounting bracket 4300 may be configured to support the first saddle half 4100 and the second saddle half 4200. The mounting bracket 4300 may further be configured to be coupled to a chassis, thereby facilitating mounting of the custom saddle base 4000 to a chassis and/or a seat post 400. The mounting bracket 4300 may be integrally formed with the first saddle half 4100 and the second saddle half 4200.

The mounting bracket 4300 may include a rear mounting bracket 4330 having one or more rear attachment apertures 4336, a front support rib 4342, a middle support rib 4343, and one or more back support ribs 4344. The rear attachment apertures 4336 may be configured to receive one or more attachment accessories. The rear attachment apertures 4336 may further be configured to receive one or more attachment fasteners (not shown) configured to secure an attachment accessory to the mounting bracket 4300.

The front support rib 4342 may extend a width of a front portion of the custom saddle base 4000 to support the front portion of the custom saddle base 4000. The front support rib 4342 may inhibit deflection of the front portion of the custom saddle base 4000 with a weight applied to the custom saddle base 4000, for example, with a rider sitting on the custom saddle base 4000. Additionally, or alternatively, the front support rib 4342 may fix a position of the front portion of the custom saddle base 4000 relative to the mounting bracket 4300.

The middle support rib 4343 may extend a width of a middle portion of the custom saddle base 4000 to support the middle portion of the custom saddle base 4000. The middle support rib 4343 may inhibit deflection of the middle portion of the custom saddle base 4000 with a weight applied to the custom saddle base 4000, for example, with a rider sitting on the custom saddle base 4000. Additionally, or alternatively, the middle support rib 4343 may fix a position of the middle portion of the custom saddle base 4000 relative to the mounting bracket 4300.

The one or more back support ribs 4344 may extend a width of a back portion of the custom saddle base 4000 to support the back portion of the custom saddle base 4000. The one or more back support ribs 4344 may inhibit deflection of the back portion of the custom saddle base 4000 with a weight applied to the custom saddle base 4000, for example, with a rider sitting on the custom saddle base 4000. Additionally, or alternatively, the one or more back support ribs 4344 may fix a position of the back portion of the custom saddle base 4000 relative to the mounting bracket 4300.

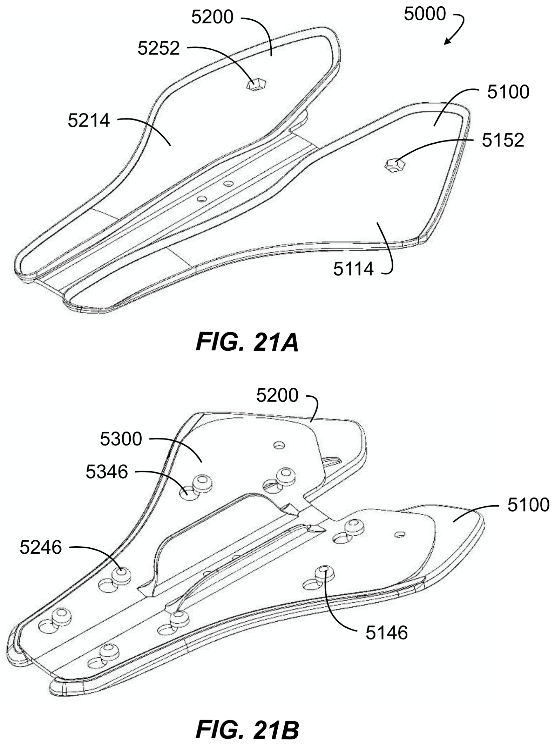

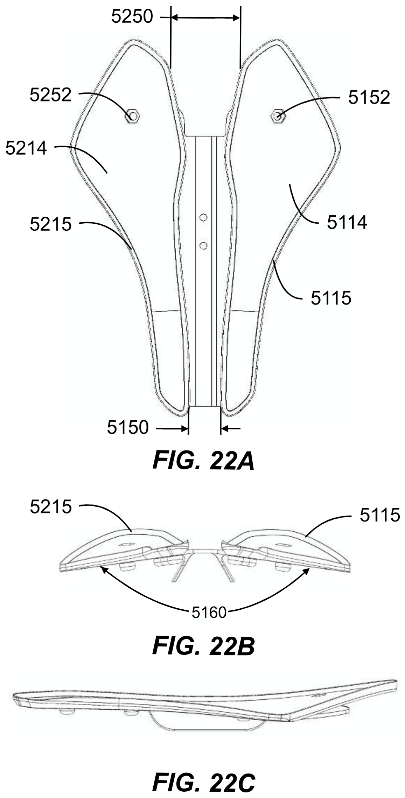

FIG. 21A is a perspective view of a custom saddle base 5000 according to an embodiment of the present disclosure. FIG. 21B is a bottom perspective view of the custom saddle base 5000, FIG. 22A is a top view of the custom saddle base 5000, FIG. 22B is a front view of the custom saddle base 5000, and FIG. 22C is a side view of the custom saddle base 5000.

Various parts and/or features of the custom saddle base 5000 may be identical or similar to their counterparts on the custom saddle base 3000 and/or custom saddle base 4000 presented herein; these parts and/or features may not be described again here. All statements made regarding the custom saddle base 3000 and/or custom saddle base 4000 may apply to the custom saddle base 5000 unless they would be contradicted by the differences between the two.

The custom saddle base 5000 may include a first saddle half 5100, a second saddle half 5200, and a custom wing 5300. The custom saddle base 5000 may be configured to receive a foam padding (not shown) and/or a seat cover (not shown) configured to protect the foam padding from weathering, abrasion, and general wear.

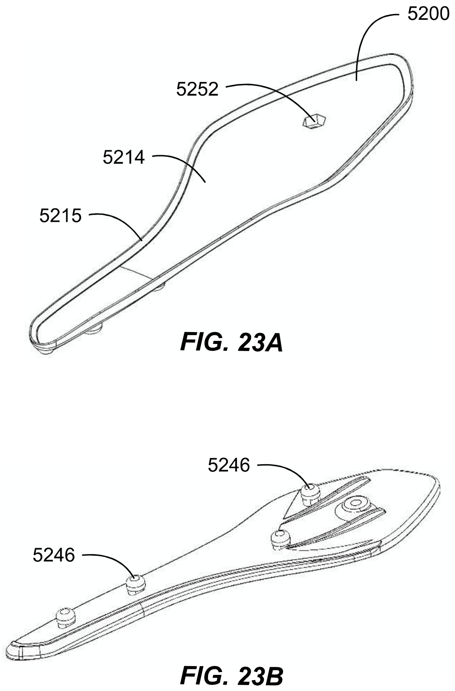

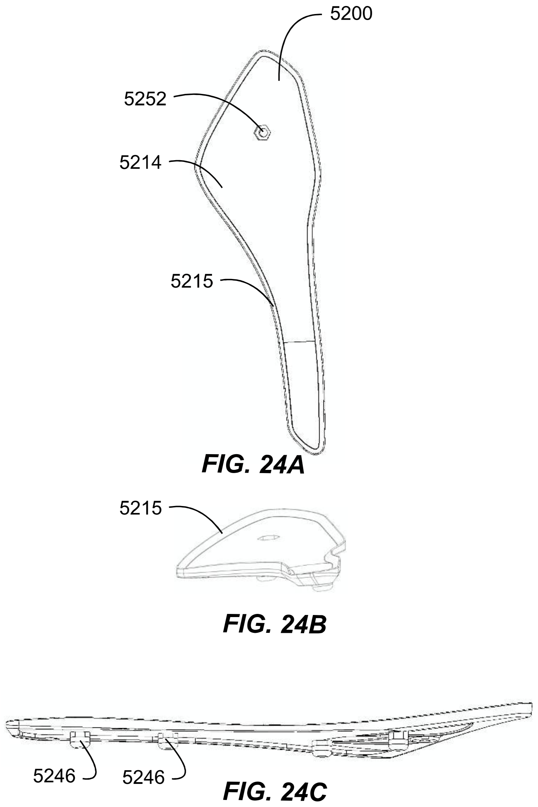

FIG. 23A is a perspective view of a second saddle half 5200 of the custom saddle base 5000 according to an embodiment of the present disclosure. FIG. 23B is a bottom perspective view of the second saddle half 5200, FIG. 24A is a top view of the second saddle half 5200, FIG. 24B is a front view of the second saddle half 5200, and FIG. 24C is a side view of the second saddle half 5200. The second saddle half 5200 may be one of a set of differently sized saddle halves, each having a different outer profile.

The second saddle half 5200 may include a second saddle half base 5214, a raised perimeter 5215, and a locking aperture 5252. The second saddle half base 5214 may generally have the same size and shape as a second saddle half base from an adjustable saddle upon which the custom saddle base 5000 is based. For example, the second saddle half base 5214 may generally have the same size and shape as the second saddle half base 214, the second saddle half base 1214, and/or second saddle half base 2214. The foam padding may be bonded to the second saddle half base 5214.

The second saddle half base 5214 may include a raised perimeter 5215. The raised perimeter 5215 may increase the rigidity of the second saddle half 5200 and may facilitate proper placement of the foam padding on the second saddle half base 5214. The raised perimeter 5215 may extend superiorly and/or inferiorly from the second saddle half base 5214.

The locking aperture 5252 may be configured to receive a nut and/or a bolt (not shown) to facilitate mounting of the second saddle half 5200 to a chassis and/or mounting bracket (not shown).

The second saddle half 5200 may further include one or more connection features 5246. The one or more connection features 5246 may be configured to facilitate mounting of the second saddle half 5200 to the custom wing 5300. The one or more connection features 5246 may be configured to engage one or more corresponding keyholes 5346 of the custom wing 5300. The one or more connection features 5246 may be configured as a cylindrical protrusion with an undercut. Additionally, or alternatively, the second saddle half 5200 may be secured to the custom wing 5300 using an adhesive. Alternatively, the second saddle half 5200 may not include any connection features 5246 and the second saddle half 5200 may be secured to the custom wing using only adhesive. Additionally, or alternatively, the second saddle half 5200 may be secured to the custom wing 5300 using any suitable fastener style, including but not limited to: threaded screws, bolts, quick release fasteners, and the like.

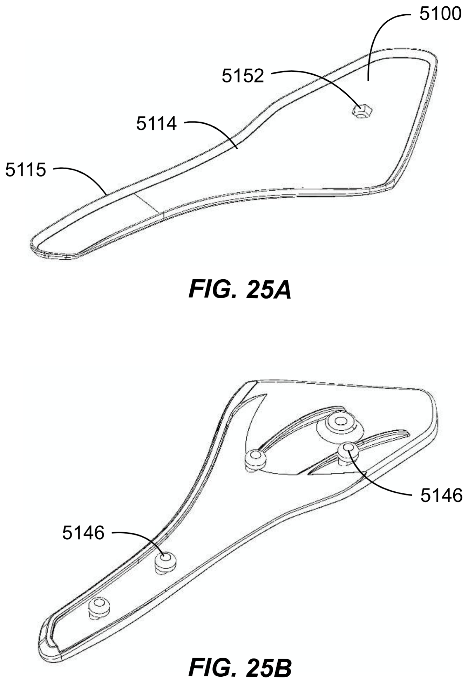

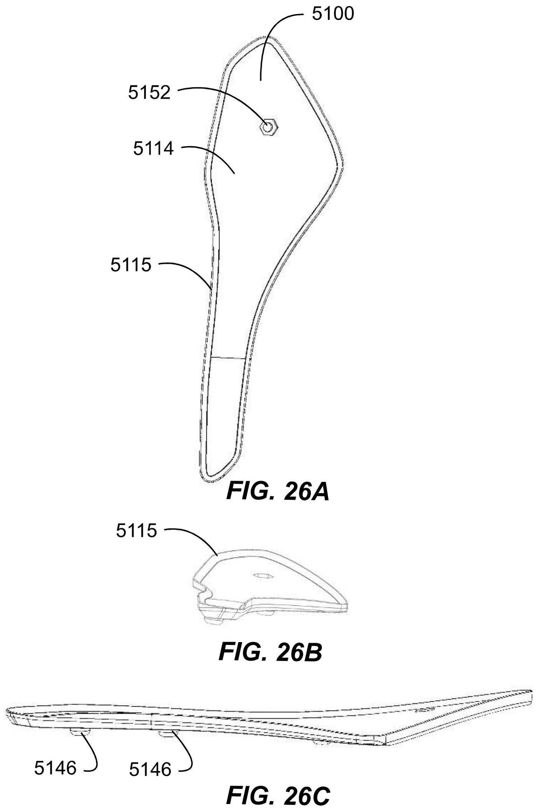

FIG. 25A is a perspective view of a first saddle half 5100 of the custom saddle base 5000 according to an embodiment of the present disclosure. FIG. 25B is a bottom perspective view of the first saddle half 5100, FIG. 26A is a top view of the first saddle half 5100, FIG. 26B is a front view of the first saddle half 5100, and FIG. 26C is a side view of the first saddle half 5100. The first saddle half 5100 may be one of a set of differently sized saddle halves, each having a different outer profile.

Various parts and/or features of the first saddle half 5100 may be identical or similar to their counterparts on the second saddle half 5200 presented herein; these parts and/or features may not be described again here. All statements made regarding the second saddle half 5200 may apply to the first saddle half 5100 unless they would be contradicted by the differences between the two. The first saddle half 5100 may include a second saddle half base 5114, a raised perimeter 5115, one or more connection features 5146, and a locking aperture 5152.

The custom saddle base 5000 may further include a front spacing 5150 and a back spacing 5250. The front spacing 5150 may be a distance between a front end of the first saddle half 5100 and a front end of the second saddle half 5200. The front spacing 2150 may be based on a rider's anatomy, riding positions, preferences, the back spacing 2250, and/or a wing angle 5160. The back spacing 5250 may be a distance between a back end of the first saddle half 5100 and the back end of the second saddle half 5200. The back spacing 5250 may be based on a rider's anatomy, riding positions, preferences, the front spacing 5150, and/or a wing angle 5160.

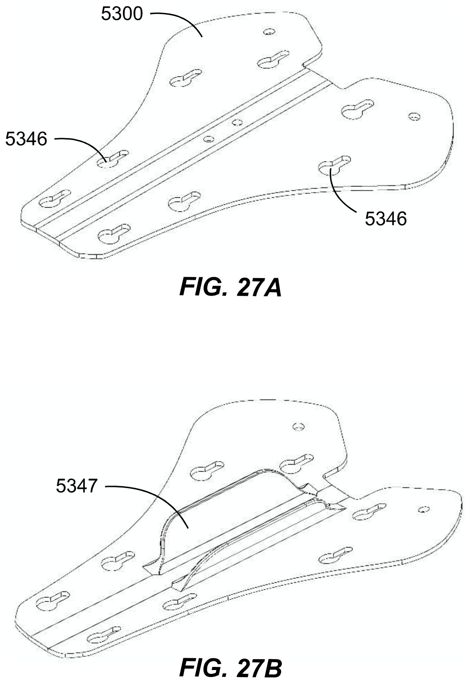

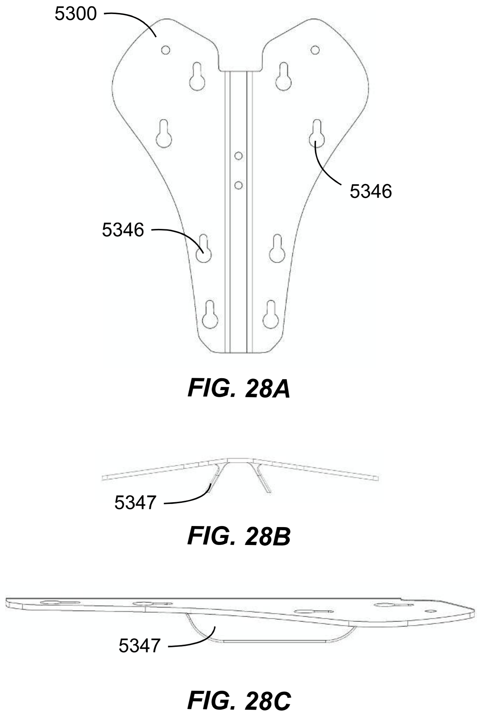

FIG. 27A is a perspective view of a custom wing 5300 of the custom saddle base 5000 according to an embodiment of the present disclosure. FIG. 27B is a bottom perspective view of the custom wing 5300, FIG. 28A is a top view of the custom wing 5300, FIG. 28B is a front view of the custom wing 5300, and FIG. 28C is a side view of the custom wing 5300.

The custom wing 5300 may include one or more keyholes 5346 and an attachment feature 5347. The attachment feature 5347 may be configured to facilitate mounting of the custom saddle base 5000 to a chassis and/or a seat post 400. The one or more keyholes 5346 may be positioned to establish a location of the first saddle half 5100 and/or the second saddle half 5200 relative to the custom wing 5300.

The custom wing 5300 may be subtractively manufactured from a custom wing blank based on adjustments of an adjustable saddle, such as the adjustable saddle 10, the adjustable saddle 1000, and/or the adjustable saddle 2000, that has been adjusted to accommodate a rider based on the rider's anatomy, riding positions, and/or preferences. More specifically, the custom wing 5300 may be subtractively manufactured based on the front spacing 1150 and the back spacing 1250 of the second adjustable saddle 1000, and/or the front spacing 2150 and the back spacing 2250 of the first adjustable saddle 2000. Additionally, or alternatively, the custom saddle base 4000 may be additively manufactured based on the adjustment markings 340 of the adjustable saddle 10.

Additionally, or alternatively, the custom wing 5300 may be manufactured as a custom wing blank including a rough outside profile but lacking connection features such as the one or more keyholes 5346. The one or more keyholes 5346 and a final outside profile may be subtractively manufactured from the custom wing blank based on adjustments of an adjustable saddle, such as the adjustable saddle 10, the adjustable saddle 1000, and/or the adjustable saddle 2000, that has been adjusted to accommodate a rider based on the rider's anatomy, riding positions, and/or preferences

The custom wing 5300 may further include a wing angle 5160. The wing angle 5160 may be based on the saddle angle 1160 of the adjustable saddle 1000 upon which the custom saddle base 5000 is based. The custom wing blank may be one of a set of custom wing blanks each having a different wing angle 5160.

Additionally, or alternatively, the custom wing 5300 may be manufactured from a block of raw material so that the profile and wing angle are created during the manufacturing process. Additionally, or alternatively, the custom wing 5300 may be molded, bent, formed, stamped, punched, or the like, from raw material and/or a custom wing blank so that, with the first saddle half 5100 and the second saddle half 5200 mounted to the custom wing 5300, the custom saddle base 5000 may match the same general form, fit, and function as an adjustable saddle upon which the custom saddle base 5000 is based.

The custom saddle base 5000 may include a first saddle half 5100 chosen from a set of differently sized first saddle halves, a second saddle half 5200 chosen from a set of differently sized second saddle halves, and a custom wing 5300 manufactured based on adjustments of an adjustable saddle, such as the adjustable saddle 10, the adjustable saddle 1000, and/or the adjustable saddle 2000, that has been adjusted to accommodate a rider based on the rider's anatomy, riding positions, and/or preferences.

More specifically, the custom saddle base 5000 may be manufactured based on the front spacing 1150 and the back spacing 1250 of the second adjustable saddle 1000, and/or the front spacing 2150 and the back spacing 2250 of the first adjustable saddle 2000. Additionally, or alternatively, the custom saddle base 5000 may be additively manufactured based on the adjustment markings 340 of the adjustable saddle 10.

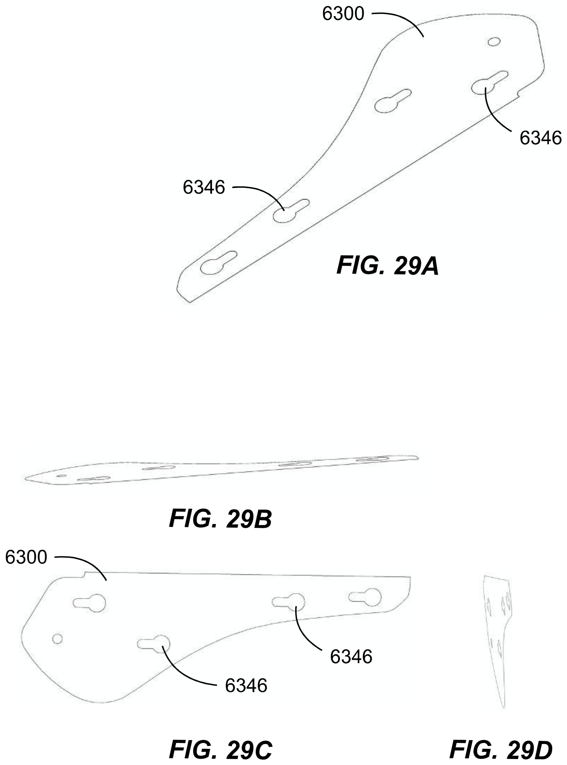

FIG. 29A is a perspective view of a thin hard inner 6300 according to an embodiment of the present disclosure. FIG. 29B is a side view of the thin hard inner 6300, FIG. 29C is a top view of the thin hard inner 6300, and FIG. 29D is a front view of the thin hard inner 6300. The thin hard inner 6300 may be configured to be mounted on the custom wing 5300 between the custom wing 5300 and the first saddle half 5100 and/or the second saddle half 5200. In this way, the thin hard inner 6300 may increase the height of the first saddle half 5100 and/or the second saddle half 5200 relative to the custom wing 5300. Additionally, or alternatively, the thin hard inner 6300 may be wedge shaped and, when mounted between the custom wing 5300 and the first saddle half 5100 and/or the second saddle half 5200, may alter an angle between the custom wing 5300 and the first saddle half 5100 and/or the second saddle half 5200.

The thin hard inner 6300 may be shaped so that a height at a front end of the first saddle half 5100 and/or the second saddle half 5200 is increased more than a height at a back end of the first saddle half 5100 and/or the second saddle half 5200 relative to the custom wing 5300. Alternatively, the thin hard inner 6300 may be shaped so that a height at a back end of the first saddle half 5100 and/or the second saddle half 5200 is increased more than a height at a front end of the first saddle half 5100 and/or the second saddle half 5200 relative to the custom wing 5300.

The thin hard inner 6300 may include one or more keyholes 6346. The one or more keyholes 6346 may be positioned to establish a location of the thin hard inner 6300 relative to the custom wing 5300.

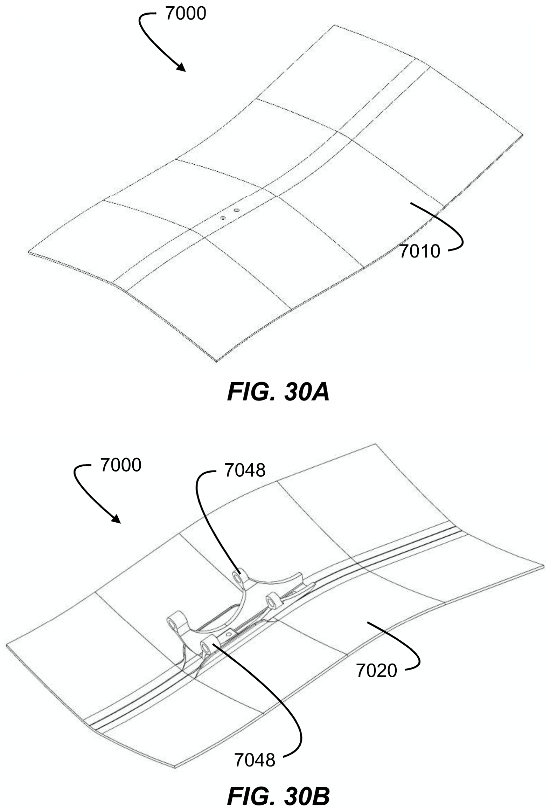

FIG. 30A is a perspective view of a custom wing blank 7000 according to an embodiment of the present disclosure. FIG. 30B is a bottom perspective view of the custom wing blank 7000. The custom wing blank 7000 may include a top side 7010, a bottom side 7020, and an attachment feature 7048.

The custom wing blank 7000 may be configured for subtractive manufacturing. The custom wing blank 7000 may be cut, milled, machined, or otherwise subtractively manufactured to create a custom wing having a desired profile based on optimum saddle measurements for a specific rider. The custom wing blank 7000 may be provided in various sizes to accommodate different rider anatomies and preferences. The attachment feature 7048 may be configured to facilitate coupling of a custom wing to a chassis after the custom wing blank 7000 has been cut to a desired profile. Additionally, or alternatively, the attachment feature 7048 may provide structural reinforcement and/or facilitate proper alignment during the subtractive manufacturing process.

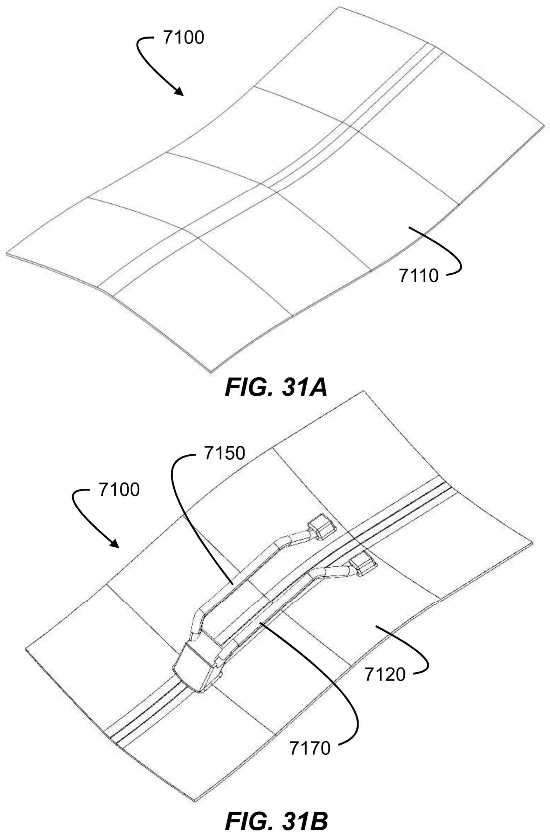

FIG. 31A is a perspective view of a custom wing blank 7100 according to an embodiment of the present disclosure. FIG. 31B is a bottom perspective view of the custom wing blank 7100. The custom wing blank 7100 may include a top side 7110, a bottom side 7120, a first rail 7150, and a second rail 7170.

The various components of the custom wing blank 7100 with similar reference numbers to those of the custom wing blank 7000 may be similar in function and/or configuration to their counterparts of the custom wing blank 7000. Differences between the custom wing blank 7100 and the custom wing blank 7000 will be set forth below.

The first rail 7150 and/or the second rail 7170 may be configured for mounting the custom wing blank 7100 to a seat post after the custom wing blank 7100 has been cut to a desired profile. Additionally, or alternatively, the first rail 7150 and/or the second rail 7170 may provide structural reinforcement and/or facilitate proper alignment during the subtractive manufacturing process. The custom wing blank 7100 may be sized and shaped to accommodate a range of saddle widths and profiles.

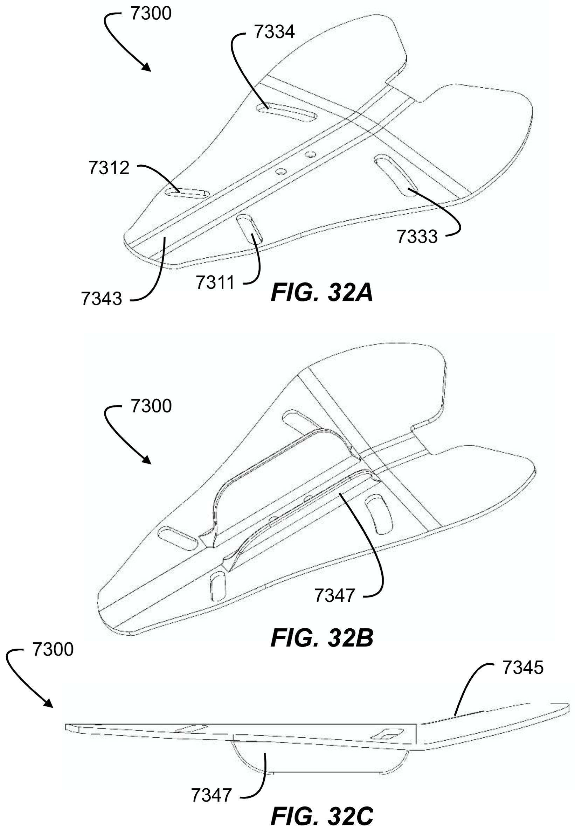

FIG. 32A is a perspective view of a custom wing 7300 having a wide front portion 7343 and a sloped rear portion 7345 according to an embodiment of the present disclosure. FIG. 32B is a bottom perspective view of the custom wing 7300. FIG. 32C is a side view of the custom wing 7300.

The various components of the custom wing 7300 with similar reference numbers to those of the custom wing 5300 may be similar in function and/or configuration to their counterparts of these previously described embodiments. Differences between the custom wing 7300 and previously described embodiments will be set forth below. The custom wing 7300 may be created by subtractively manufacturing the custom wing blank 7000 or the custom wing blank 7100. The wide front portion 7343 may provide increased support at a front end of a saddle, while the sloped rear portion 7345 may provide clearance for a rider's legs during pedaling. The custom wing 7300 may include an attachment feature 7347, keyholes 7311, 7312, 7333, 7334 configured to receive fasteners for securing a first saddle half and a second saddle half. The profile of the custom wing 7300 may be cut based on optimum saddle measurements determined from an adjustable saddle that has been adjusted to accommodate a specific rider.

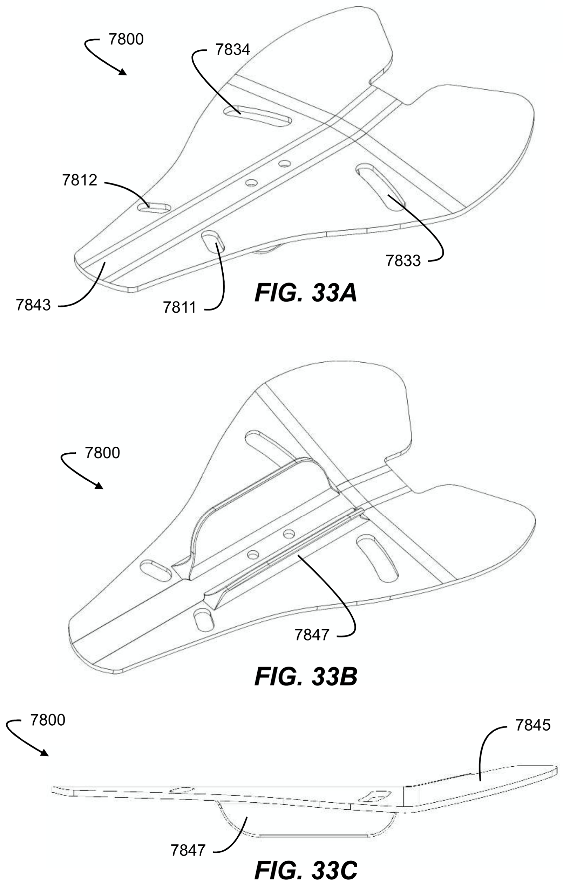

FIG. 33A is a perspective view of a custom wing 7800 having a narrow front portion 7843 and a sloped rear portion 7845 according to an embodiment of the present disclosure. FIG. 33B is a bottom perspective view of the custom wing 7800. FIG. 33C is a side view of the custom wing 7800.

The various components of the custom wing 7800 with similar reference numbers to those of the custom wing 7300 may be similar in function and/or configuration to their counterparts of the custom wing 7300. Differences between the custom wing 7800 and the custom wing 7300 will be set forth below. The custom wing 7800 may feature a narrow front portion 7843 instead of a wide front portion while maintaining a sloped rear portion 7845. The narrow front portion 7843 may provide less coverage at a front end of a saddle compared to the wide front portion 7343 of the custom wing 7300. This configuration may be preferred by riders who require less frontal support or who prefer a more minimalist saddle design. Like the custom wing 7300, the custom wing 7800 may include an attachment feature 7847, a sloped rear portion 7845 and keyholes 7811, 7812, 7833, 7834 for securing saddle halves.

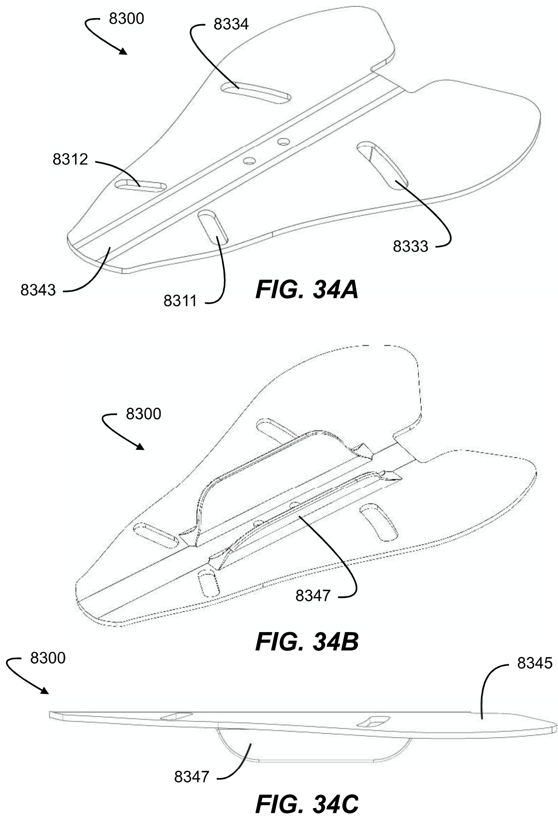

FIG. 34A is a perspective view of a custom wing 8300 having a wide front portion 8343 according to an embodiment of the present disclosure. FIG. 34B is a bottom perspective view of the custom wing 8300. FIG. 34C is a side view of the custom wing 8300.

The various components of the custom wing 8300 with similar reference numbers to those of the custom wing 7300 and/or the custom wing 7800 may be similar in function and/or configuration to their counterparts of these previously described embodiments. Differences between the custom wing 8300 and previously described embodiments will be set forth below. The custom wing 8300 may include a wide front portion 8343 and a straight rear portion 8345. The custom wing 8300 may be configured to provide increased structural rigidity compared to other custom wing embodiments. The custom wing 8300 may include an attachment feature 8347, keyholes 8311, 8312, 8333, 8334 configured to receive fasteners. The geometry of the custom wing 8300 may be optimized for riders who require maximum support at a front end of a saddle.

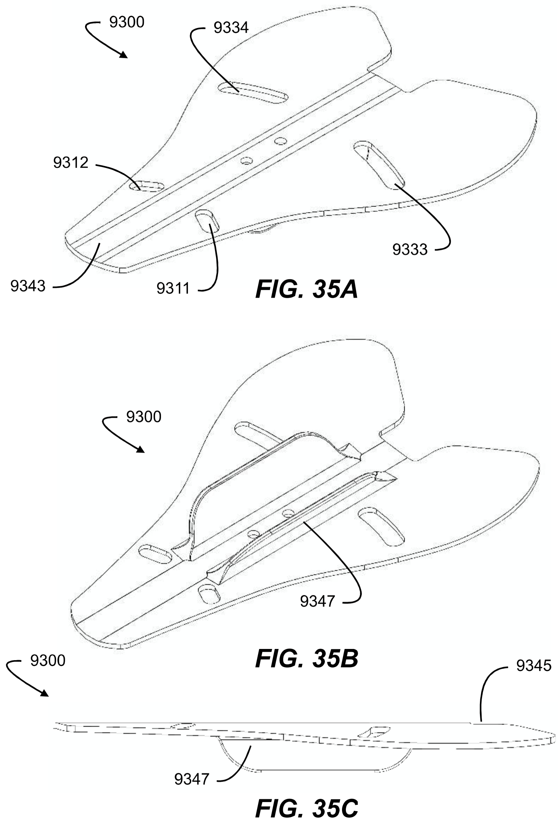

FIG. 35A is a perspective view of a custom wing 9300 having a narrow front portion according to an embodiment of the present disclosure. FIG. 35B is a bottom perspective view of the custom wing 9300. FIG. 35C is a side view of the custom wing 9300.

The various components of the custom wing 9300 with similar reference numbers to those of the custom wing 7800, custom wing 7300, and/or custom wing 8300 may be similar in function and/or configuration to their counterparts of these previously described embodiments. Differences between the custom wing 9300 and previously described embodiments will be set forth below. The custom wing 9300 may feature a narrow front portion 9343 configured to provide minimal coverage at a front end of a saddle. This design may be preferred by riders who prioritize weight reduction and/or who experience discomfort with wider saddle configurations. The custom wing 9300 may include an attachment feature 9347, keyholes 9311, 9312, 9333, 9334 and a straight rear portion 9345. The narrow front portion of the custom wing 9300 may reduce overall weight while maintaining necessary structural support.

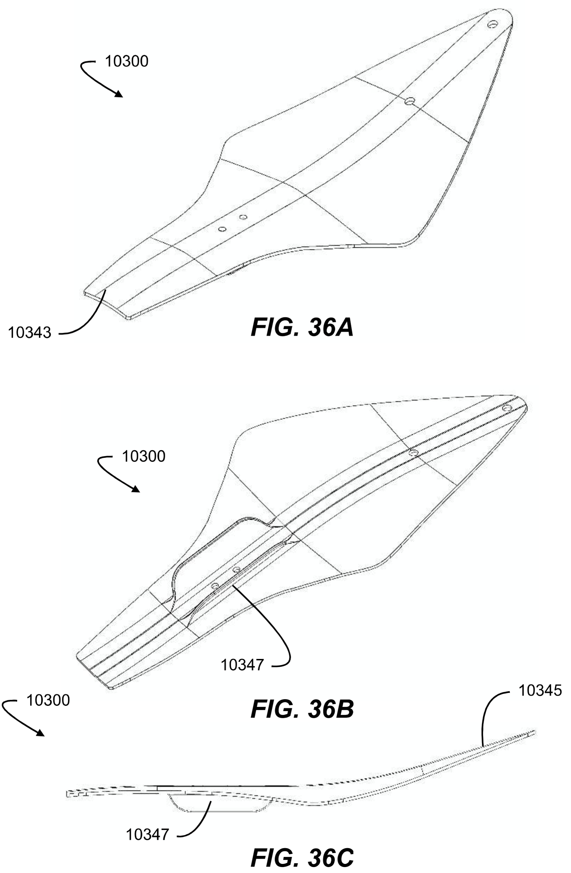

FIG. 36A is a perspective view of a custom wing 10300 according to an embodiment of the present disclosure. FIG. 36B is a bottom perspective view of the custom wing 10300. FIG. 36C is a side view of the custom wing 10300.

The various components of the custom wing 10300 with similar reference numbers to those of previously described custom wing embodiments may be similar in function and/or configuration to their counterparts of these previously described embodiments. Differences between the custom wing 10300 and previously described embodiments will be set forth below. The custom wing 10300 may be configured with a unique profile that balances support and flexibility. The custom wing 10300 may include an attachment feature 10347, a tapered front portion 10343 and a raised rear portion 10345. The profile of the custom wing 10300 may be optimized for riders who require a specific combination of front support and rear flexibility. The custom wing 10300 may be created through subtractive manufacturing from a custom wing blank such as custom wing blank 7000 or custom wing blank 7100.

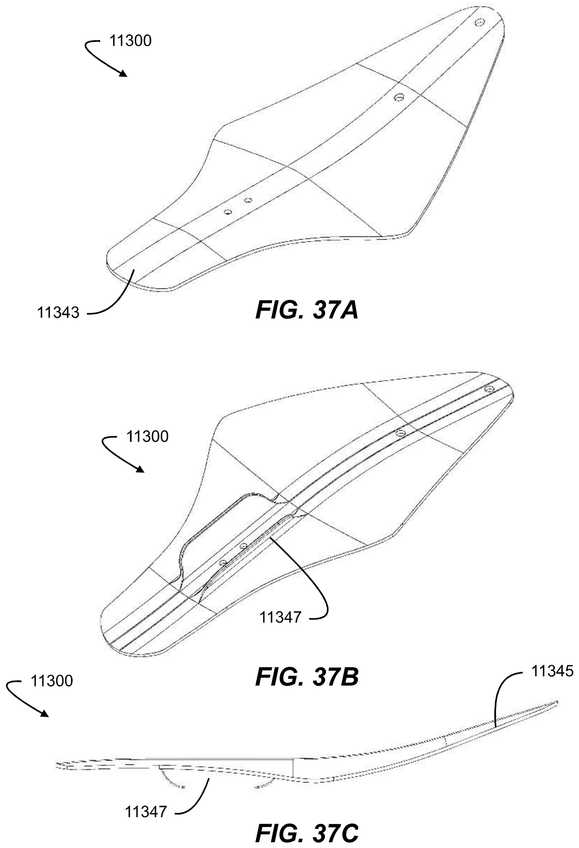

FIG. 37A is a perspective view of a custom wing 11300 according to an embodiment of the present disclosure. FIG. 37B is a bottom perspective view of the custom wing 11300. FIG. 37C is a side view of the custom wing 11300.

The various components of the custom wing 11300 with similar reference numbers to those of the custom wing 10300 and/or other previously described custom wing embodiments may be similar in function and/or configuration to their counterparts of these previously described embodiments. Differences between the custom wing 11300 and previously described embodiments will be set forth below. The custom wing 11300 may feature a profile designed to provide optimal weight distribution and support characteristics. The custom wing 11300 may include a rounded front portion 11343, a raised rear portion 11345, and attachment feature 11347 configured to enhance rigidity in specific areas while maintaining flexibility in others. The geometry of the custom wing 11300 may be tailored to accommodate specific riding positions and rider preferences determined through adjustment of an adjustable saddle.

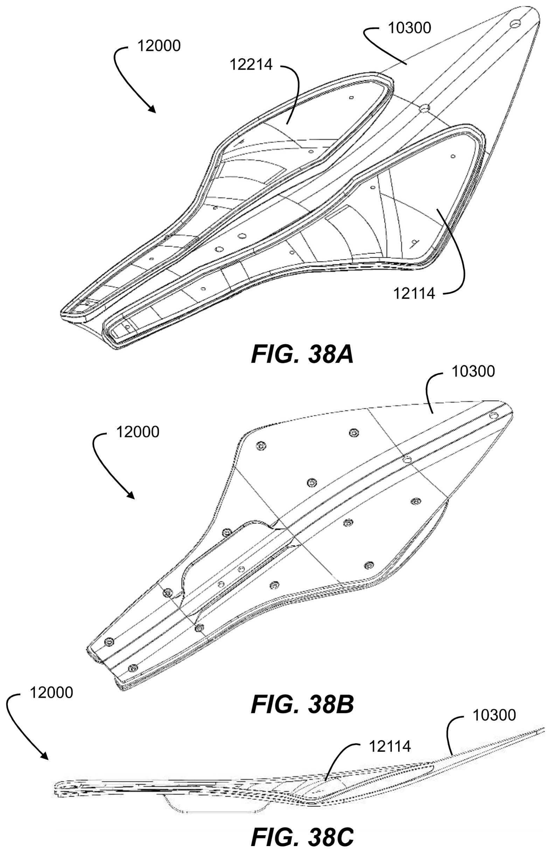

FIG. 38A is a perspective view of a custom saddle base 12000 including the custom wing 10300 according to an embodiment of the present disclosure. FIG. 38B is a bottom perspective view of the custom saddle base 12000. FIG. 38C is a side view of the custom saddle base 12000.

The various components of the custom saddle base 12000 with similar reference numbers to those of the custom saddle base 3000, custom saddle base 5000, and/or other previously described saddle base embodiments may be similar in function and/or configuration to their counterparts of these previously described embodiments. Differences between the custom saddle base 12000 and previously described embodiments will be set forth below. The custom saddle base 12000 may include the custom wing 10300, a first saddle half 12114, and a second saddle half 12214 secured to the custom wing 10300. The first saddle half 12114 and the second saddle half 12214 may be positioned and secured to the custom wing 10300 based on optimum saddle measurements determined from an adjustable saddle. With a foam padding and a seat cover in place, the custom saddle base 12000 may match the same general form, fit, and function as an adjustable saddle upon which it is based, but without adjustability features.

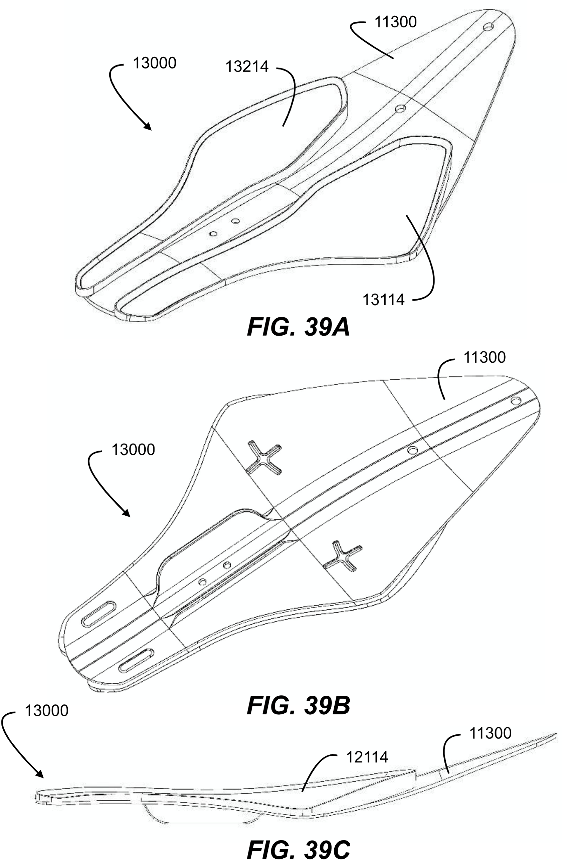

FIG. 39A is a perspective view of a custom saddle base 13000 including the custom wing 11300 according to an embodiment of the present disclosure. FIG. 39B is a bottom perspective view of the custom saddle base 13000. FIG. 39C is a side view of the custom saddle base 13000.

The various components of the custom saddle base 13000 with similar reference numbers to those of the custom saddle base 12000 and/or other previously described saddle base embodiments may be similar in function and/or configuration to their counterparts of these previously described embodiments. Differences between the custom saddle base 13000 and previously described embodiments will be set forth below. The custom saddle base 13000 may include the custom wing 11300, a first saddle half 13114, and a second saddle half 13214. The first saddle half 13114 and the second saddle half 13214 may be secured to the custom wing 11300 at positions determined by optimum saddle measurements for a specific rider. The custom saddle base 13000 may be configured to receive foam padding and a seat cover. The spacing and positioning of the first saddle half 13114 and the second saddle half 13214 may replicate the adjusted configuration of an adjustable saddle.

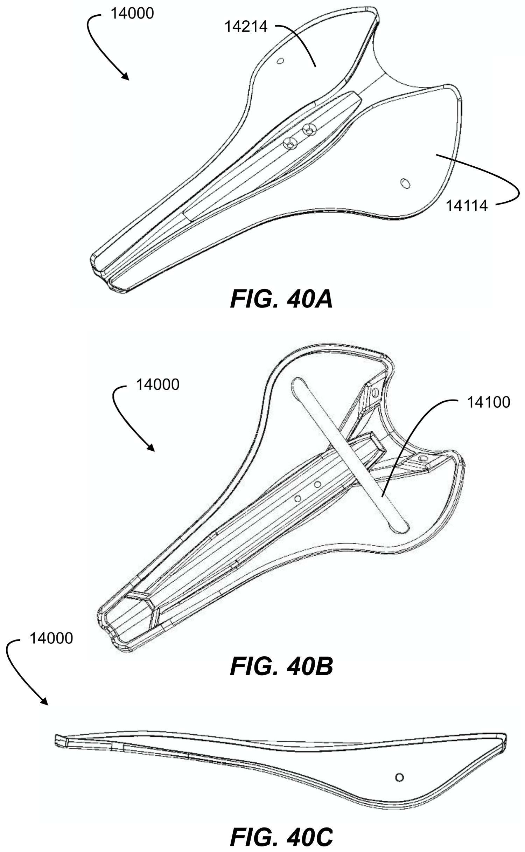

FIG. 40A is a perspective view of a long hybrid frame 14000 according to an embodiment of the present disclosure. FIG. 40B is a bottom perspective view of the long hybrid frame 14000. FIG. 40C is a side view of the long hybrid frame 14000.

The various components of the long hybrid frame 14000 with similar reference numbers to those of previously described embodiments may be similar in function and/or configuration to their counterparts of these previously described embodiments. Differences between the long hybrid frame 14000 and previously described embodiments will be set forth below. The long hybrid frame 14000 may be configured to bridge a first saddle half 14114 and a second saddle half 14214. The long hybrid frame 14000 may provide structural support while maintaining a desired spacing between saddle halves. The long hybrid frame 14000 may include one or more back supports 14100 extending across a width of a back portion of the long hybrid frame 14000 to inhibit deflection of the long hybrid frame 14000 when weight is applied. The long hybrid frame 14000 may be longer than other frame embodiments to accommodate riders who require increased spacing between saddle halves. The long hybrid frame 14000 may be manufactured as a single component or may be assembled from multiple components.

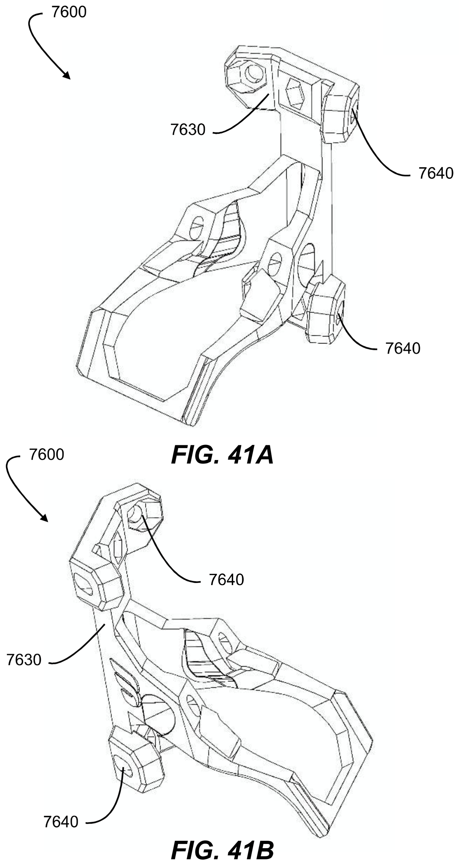

FIG. 41A is a perspective view of an accessory bracket 7600 according to an embodiment of the present disclosure. FIG. 41B is a perspective view of the accessory bracket 7600.

The various components of the accessory bracket 7600 with similar reference numbers to those of previously described embodiments may be similar in function and/or configuration to their counterparts of these previously described embodiments. Differences between the accessory bracket 7600 and previously described embodiments will be set forth below. The accessory bracket 7600 may include mounting features 7630 and attachment points 7640. The mounting features 7630 may be configured to attach the accessory bracket 7600 to a saddle base or saddle assembly. The attachment points 7640 may be configured to receive accessories such as saddle bags, lights, or other cycling equipment. The accessory bracket 7600 may be designed to integrate with various saddle base configurations without interfering with rider comfort or saddle functionality.

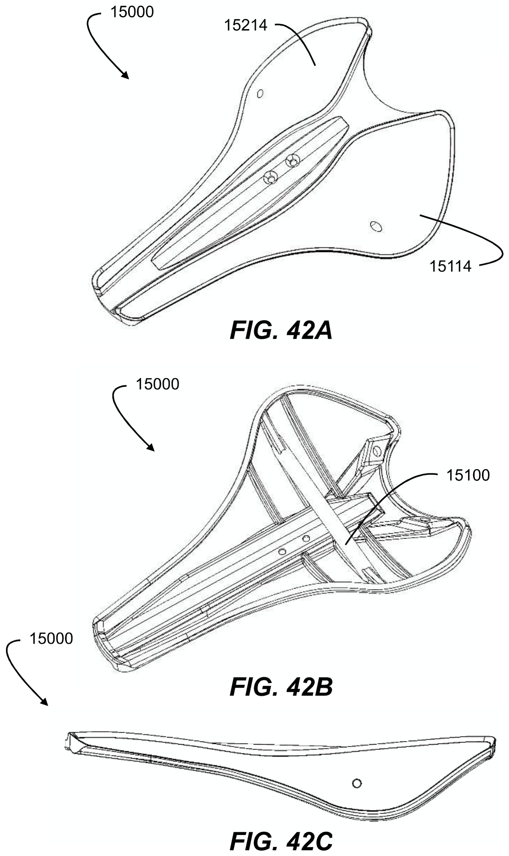

FIG. 42A is a perspective view of a short hybrid frame 15000 according to an embodiment of the present disclosure. FIG. 42B is a bottom perspective view of the short hybrid frame 15000. FIG. 42C is a side view of the short hybrid frame 15000.

The various components of the short hybrid frame 15000 with similar reference numbers to those of the long hybrid frame 14000 and/or other previously described frame embodiments may be similar in function and/or configuration to their counterparts of these previously described embodiments. Differences between the short hybrid frame 15000 and previously described embodiments will be set forth below. The short hybrid frame 15000 may include a first saddle half 15114 and a second saddle half 15214. The short hybrid frame 15000 may include one or more back supports 15100 extending across a width of a back portion of the short hybrid frame 15000 to inhibit deflection of the short hybrid frame 15000 when weight is applied. The short hybrid frame 15000 may be configured to provide structural support for riders who require less spacing between saddle halves compared to the long hybrid frame 14000. The overall length of the short hybrid frame 15000 may be optimized for riders with narrower sit bone measurements or those who prefer a more compact saddle configuration.

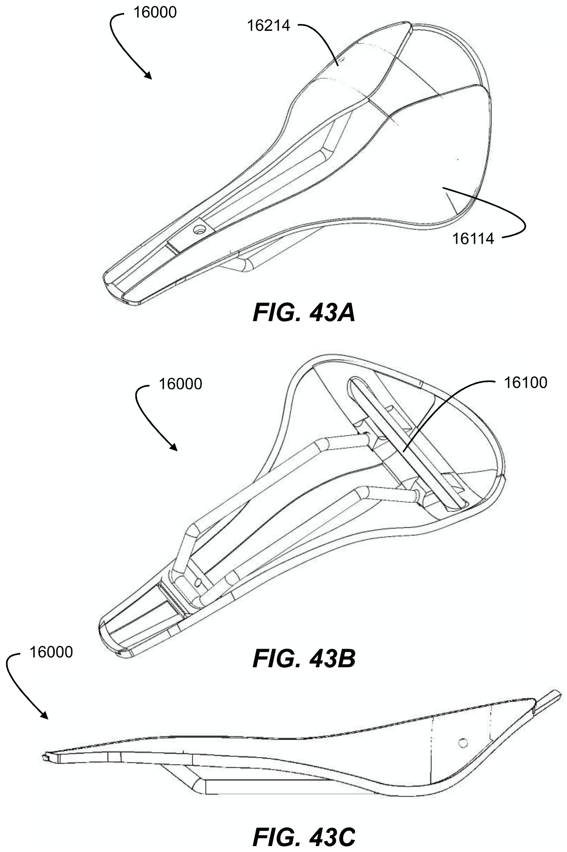

FIG. 43A is a perspective view of a hybrid adjustable assembly 16000 according to an embodiment of the present disclosure. FIG. 43B is a bottom perspective view of the hybrid adjustable assembly 16000. FIG. 43C is a side view of the hybrid adjustable assembly 16000.

The various components of the hybrid adjustable assembly 16000 with similar reference numbers to those of previously described embodiments may be similar in function and/or configuration to their counterparts of these previously described embodiments. Differences between the hybrid adjustable assembly 16000 and previously described embodiments will be set forth below. The hybrid adjustable assembly 16000 may include a first saddle half 16114, a second saddle half 16214, and an adjustment mechanism 16100. The adjustment mechanism 16100 may allow for limited adjustability of the hybrid adjustable assembly 16000 while maintaining a primarily fixed configuration.

The hybrid adjustable assembly 16000 may represent a compromise between fully adjustable saddles and fully fixed custom saddle bases, providing some degree of adjustment capability for fine-tuning. In an embodiment, the adjustment mechanism may facilitate adjustment of a rear width and/or a front width of the hybrid adjustable assembly 16000.

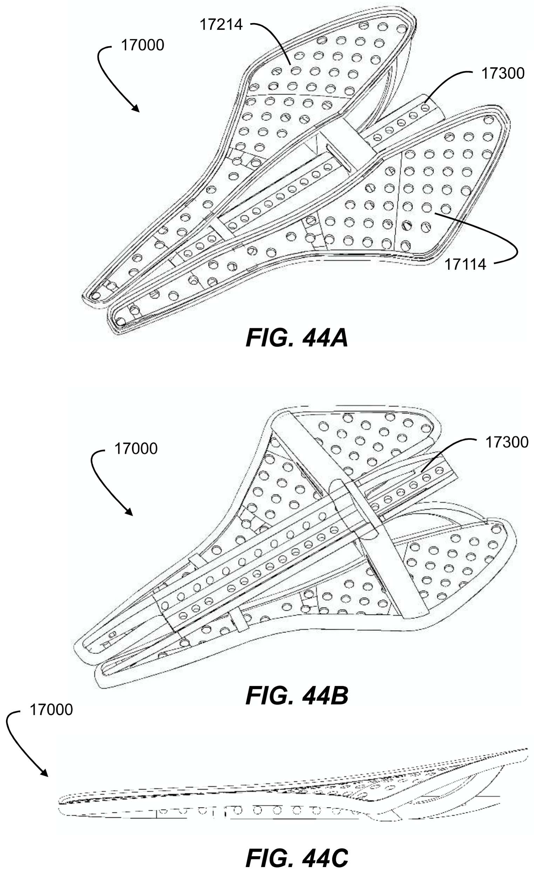

FIG. 44A is a perspective view of a custom saddle base 17000 according to an embodiment of the present disclosure. FIG. 44B is a bottom perspective view of the custom saddle base 17000. FIG. 44C is a side view of the custom saddle base 17000.

The various components of the custom saddle base 17000 with similar reference numbers to those of the custom saddle base 3000, custom saddle base 5000, custom saddle base 12000, custom saddle base 13000, and/or other previously described saddle base embodiments may be similar in function and/or configuration to their counterparts of these previously described embodiments. Differences between the custom saddle base 17000 and previously described embodiments will be set forth below. The custom saddle base 17000 may include a first saddle half 17114, a second saddle half 17214, and a mounting bracket 17300. The custom saddle base 17000 may be configured to provide a specific combination of support, flexibility, and comfort based on optimum saddle measurements for a specific rider. The custom saddle base 17000 may be manufactured through subtractive manufacturing techniques, additive manufacturing techniques, or a combination thereof.

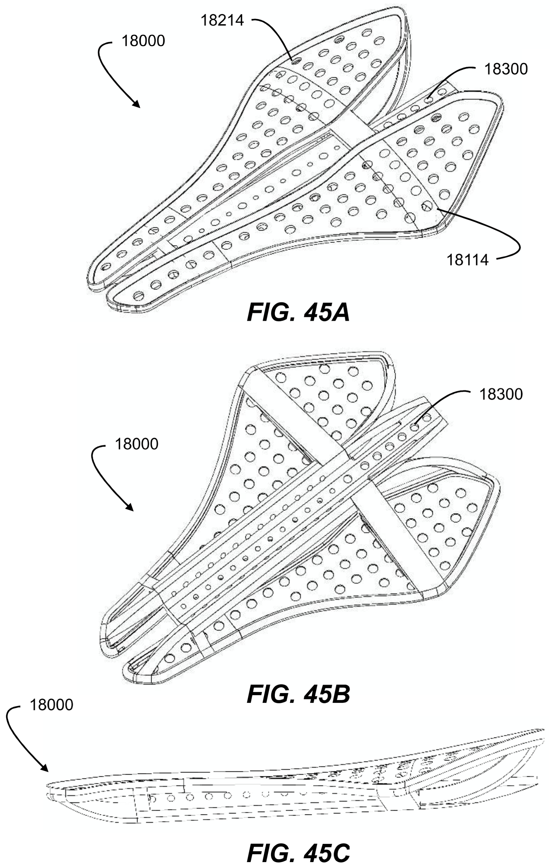

FIG. 45A is a perspective view of a custom saddle base 18000 according to an embodiment of the present disclosure. FIG. 45B is a bottom perspective view of the custom saddle base 18000. FIG. 45C is a side view of the custom saddle base 18000.

The various components of the custom saddle base 18000 with similar reference numbers to those of the custom saddle base 17000 and/or other previously described saddle base embodiments may be similar in function and/or configuration to their counterparts of these previously described embodiments. Differences between the custom saddle base 18000 and previously described embodiments will be set forth below. The custom saddle base 18000 may include a first saddle half 18114, a second saddle half 18214, and a mounting bracket 18300. The spacing and positioning of components in the custom saddle base 18000 may be optimized for a specific rider based on adjustments made to an adjustable saddle. The custom saddle base 18000 may be configured to receive foam padding and a seat cover, and may provide the same general form, fit, and function as an adjusted adjustable saddle without adjustability features.

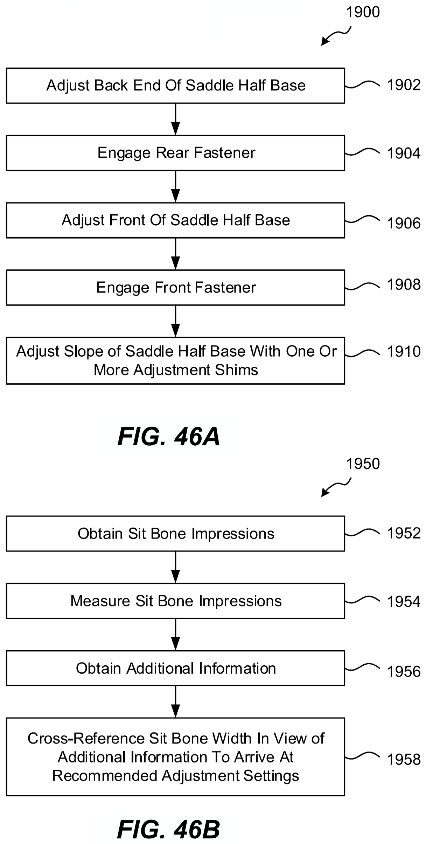

FIG. 46A is a flowchart of a method of adjusting the adjustable saddles of the present disclosure pertinent to a specific rider. The method 1900 may begin with a step 1902 in which a back end of a saddle half base may be adjusted. In this step, a back end of at least one saddle half base may be slidably, translationally, and/or pivotally positioned relative to a rear mounting bracket. The at least one saddle half base may have a back end with an arcuate adjustment channel formed therein which may be configured to receive a rear fastener. Additionally, in at least one embodiment, the rear mounting bracket may include multiple apertures configured to receive the rear fastener. In this manner, the back end of the at least one saddle half base may be attached to the rear mounting bracket at different locations along the rear mounting bracket to positionally translate the least one saddle half base relative to the rear mounting bracket.

Once the back end of the at least one saddle half base has been adjusted to a desired position, the method 1900 may proceed to a step 1904 in which the rear fastener may be engaged to prevent the back end of the at least one saddle half base from moving relative to the rear mounting bracket.

Once the back end of the at least one saddle half base has been adjusted and fastened in place, the method 1900 may proceed to a step 1906 in which a front end of the at least one saddle half base may be adjusted. In this step, the front end of the at least one saddle half base may be slidably, translationally, and/or pivotally positioned relative to a front mounting bracket. In at least one embodiment, the front mounting bracket may include at least one angled slot formed therein configured to receive a front fastener. In other embodiments, the front mounting bracket may include multiple apertures formed therein and configured to receive the front fastener and the at least one saddle half base may include at least one angled slot formed therein configured to receive the front fastener.

Once the front end of the at least one saddle half base has been adjusted pertinent to a specific rider, the method 1900 may proceed to a step 1908 in which the front fastener may be engaged to prevent the front end of the at least one saddle half base from sliding relative to the front mounting bracket.

Alternatively, or in addition thereto, the method 1900 may include a step 1910 in which a height, angle, side-to side flatness, and/or front-to-back slope of the at least one saddle half base may be adjusted with one or more adjustment shims. The one or more adjustment shims may be used in conjunction with a chassis of the adjustable saddle to adjust the height, angle, side-to side flatness, and/or front-to-back slope of the at least one saddle half base. For example, at least one adjustment shim may be placed between at least one of the front and rear mounting brackets and the at least one saddle half base to adjust the height, angle, side-to side flatness, and/or front-to-back slope of the at least one saddle half base. In this step, any number or combination of adjustment shims may be used in any desired configuration to individually adjust the height, angle, side-to side flatness, and/or front-to-back slope of the at least one saddle half base.

FIG. 46B is a flowchart of a method of obtaining recommended saddle measurements pertinent to a specific rider to facilitate an adjustment process. The method 1950 may begin with a step 1952 in which sit bone impressions may be obtained for a specific rider. The sit bone impressions may be obtained by seating the specific rider on top of a compressible material to form the sit bone impressions. In at least one embodiment, the compressible material may comprise compressible corrugated cardboard that is configured to form the sit bone impressions.

Once the sit bone impressions have been formed, the method 1950 may proceed to a step 1954 in which sit bone measurements may be obtained from the sit bone impressions. The sit bone impressions may be measured to obtain an approximate sit bone width for the individual.

Once the approximate sit bone measurements have been obtained from the sit bone impressions, the method may proceed to a step 1956 in which additional information from the specific rider may be obtained for use as additional input in formulating recommended adjustment settings for the individual. The additional information may include any relevant information including but not limited to: a preferred riding position of the individual (e.g., upright vs. race position, and/or every riding position in between), a bike application type (e.g., road bike, triathlon bike, mountain bike, police bike applications, etc.), a specific morphology or medical condition of the individual, a gender of the individual, and the like.

Once the additional information is obtained from the specific rider, the method 1950 may proceed to a step 1958 in which recommended saddle measurements may be obtained by cross-referencing the specific rider's approximate sit bone width, in view of the additional information obtained from the specific rider, to arrive at recommended adjustment settings for the specific rider.

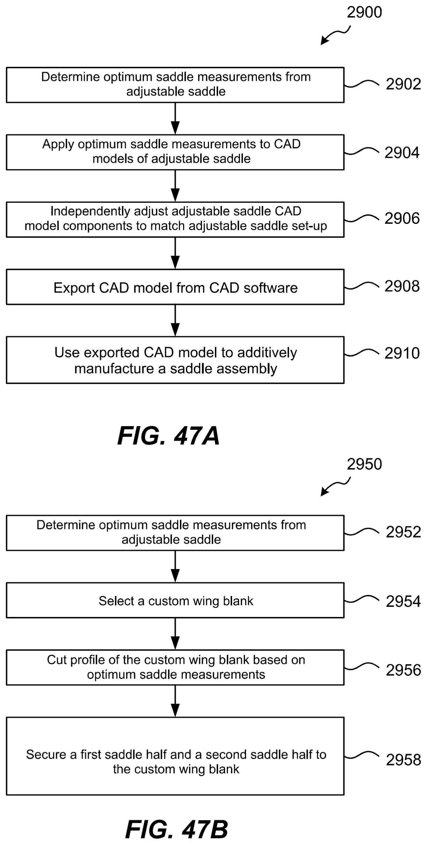

FIG. 47A is a flowchart of a method of additive manufacturing a custom saddle base based on saddle measurements for a specific rider. The method 2900 may begin with a step 2902 in which optimum saddle measurements may be determined from an adjustable saddle, whereby the adjustable saddle has been adjusted using the method 1900 and/or the method 1950 as described above. In this step, optimum saddle measurements of the adjusted saddle, including but limited to, a front spacing, a rear spacing, and/or a saddle angle are identified.

The method may then proceed to step 2904 in which the optimum saddle measurements of the adjusted saddle identified in step 2902 are applied to a CAD model of the adjustable saddle. The CAD model may be configured with mates and/or related dimensions so that the optimum saddle measurements may be inputted directly into the CAD model. For example: there may be an input for the right and left front distances of a saddle from a center plane, and the right and left back distances of a saddle from the center plane. With the optimum saddle measurements inputted, the CAD model may be rebuilt to apply the dimensions and relations.

The method may then proceed to step 2906 in which the CAD model components may be further independently adjusted to generally match the adjustable saddle set-up. The CAD models may then be an accurate representation of the adjusted saddle.

The method may then proceed to step 2908 in which the CAD model is exported to a file format that is compatible with additive manufacturing. For example, the CAD model may be exported as an .stl (stereolithography) file format for use in a 3D printer.

The method may then proceed to step 2910 in which the exported CAD model file is imported and/or otherwise transferred to an additive manufacturing machine. The additive manufacturing machine may then be used to additively manufacture a custom saddle base including a first saddle half and a second saddle half. The method may further include positioning the second saddle half relative to the first saddle half as indicated by the saddle measurements.

FIG. 47B is a flowchart of a method of subtractively manufacturing a custom saddle base based on an adjustment setting for a specific rider. The method 2950 may begin with a step 2952 in which optimum saddle measurement may be determined from an adjustable saddle, whereby the adjustable saddle has been adjusted using the method 1900 and/or the method 1950 as described above. In this step, optimum saddle measurements of the adjusted saddle, including but limited to, a front spacing, a back spacing, and/or a saddle angle are identified.

The method may then proceed to step 2954 in which a custom wing blank (for example: custom wing blank 7000 or custom wing blank 7100) is chosen from a set of differently sized custom wing blanks prior to subtractively manufacturing the custom wing. The custom wing blank may be chosen based on the type of adjustable saddle used in step 2952 to determine the optimum saddle measurements. Additionally, or alternatively, the custom wing blank may be chosen based on the desired first saddle half and second saddle half.

The method may then proceed to step 2956 in which a profile of the chosen custom wing blank is cut based on the optimum saddle measurements identified in step 2952. The custom wing blank may be cut using CNC milling machine, a CNC machining center, a CNC router, or the like.

The method may then proceed to step 2958 in which a first saddle half and a second saddle half may be secured to the custom wing, thereby creating a custom saddle base 5000 having the same general form, fit, and function as an adjustable saddle upon which the custom saddle base 5000 is based.

The invention and disclosure also includes the subject matter of the following numbered clauses:
1. A method of manufacturing a bicycle saddle, the method comprising:
   obtaining saddle measurements pertinent to a specific rider; and
   using the saddle measurements to additively manufacture a saddle base comprising:
      a first saddle half; and
      a second saddle half;
   wherein additively manufacturing the saddle base comprises positioning the second saddle half relative to the first saddle half as indicated by the saddle measurements.
2. The method of clause 1, further comprising adjusting components of an adjustable saddle relative to each other to accommodate a rider to create an adjusted saddle;
   wherein obtaining the saddle measurements comprises obtaining the saddle measurements from the adjusted saddle.
3. The method of clause 1 or clause 2, wherein additively manufacturing the saddle base further comprises forming a mounting bracket integrally with the first saddle half and the second saddle half, wherein the mounting bracket comprises:
   a front support rib extending across a width of a front portion of the saddle base;
   a middle support rib extending across a width of a middle portion of the saddle base;
      and
   one or more back support ribs extending across a width of a back portion of the saddle base.
4. The method of any of clauses 1-3, wherein obtaining the saddle measurements comprises identifying one or more of a front spacing, a rear spacing, and a saddle angle.
5. The method of any of clauses 1-4, wherein obtaining the saddle measurements comprises obtaining a sit bone impression by seating the specific rider on a compressible material and using a measurement obtained from the sit bone impression to obtain an approximate sit bone width for the specific rider.
6. The method of clause 5, wherein obtaining the saddle measurements further comprises:
   obtaining additional information from the specific rider including at least one of: a preferred riding position, a bike application type, a specific morphology, a medical condition, and a gender; and
   cross-referencing the approximate sit bone width with the additional information to arrive at recommended saddle measurements.
7. A method of manufacturing a bicycle saddle, the method comprising:
   obtaining saddle measurements pertinent to a specific rider;
   subtractively manufacturing a custom wing from a custom wing blank based on the saddle measurements; and
   mounting a first saddle half and a second saddle half to the custom wing so that the bicycle saddle matches the saddle measurements.
8. The method of clause 7, further comprising adjusting components of an adjustable saddle relative to each other to accommodate a rider to create an adjusted saddle;
   wherein obtaining the saddle measurements comprises obtaining the saddle measurements from the adjusted saddle.
9. The method of clause 7 or clause 8, further comprising, prior to subtractively manufacturing the custom wing, using the saddle measurements to select the custom wing blank from a plurality of differently sized custom wing blanks.
10. The method of any of clauses 7-9, wherein subtractively manufacturing the custom wing comprises forming one or more keyholes in the custom wing, wherein the one or more keyholes are positioned to establish locations for the first saddle half and the second saddle half relative to the custom wing.
11. The method of any of clauses 7-10, wherein mounting the first saddle half and the second saddle half to the custom wing comprises:
   engaging one or more connection features of the first saddle half with corresponding keyholes in the custom wing; and
   engaging one or more connection features of the second saddle half with corresponding keyholes in the custom wing.
12. The method of any of clauses 7-11, further comprising positioning a thin hard inner between the custom wing and at least one of the first saddle half and the second saddle half.
13. The method of any of clauses 7-12, further comprising securing the first saddle half and the second saddle half to the custom wing using an adhesive.
14. A bicycle saddle, customized based on adjustments made to an adjustable saddle, the bicycle saddle comprising:
   a first saddle half;
   a second saddle half; and
   a mounting bracket configured to support the first saddle half and the second saddle half;
   wherein:
      the first saddle half, the second saddle half, and the mounting bracket are formed as a single piece; and
      the first saddle half and the second saddle half are asymmetrically positioned across a center plane of the bicycle saddle.
15. The bicycle saddle of clause 14, wherein at least one of the first saddle half and the second saddle half comprises a raised perimeter extending from a saddle half base, wherein the raised perimeter is configured to increase rigidity and facilitate proper placement of foam padding.
16. The bicycle saddle of clause 14 or clause 15, wherein the mounting bracket comprises:
   a front support rib extending across a width of a front portion of the bicycle saddle;
   a middle support rib extending across a width of a middle portion of the bicycle saddle; and
   one or more back support ribs extending across a width of a back portion of the bicycle saddle;
   wherein the front support rib, the middle support rib, and the one or more back support ribs are configured to inhibit deflection of the bicycle saddle when weight is applied.
17. The bicycle saddle of clause 16, wherein the front support rib, the middle support rib, and the one or more back support ribs are configured to fix positions of the front portion, the middle portion, and the back portion of the bicycle saddle relative to the mounting bracket.
18. The bicycle saddle of any of clauses 14-17, wherein the first saddle half, the second saddle half, and the mounting bracket are additively manufactured as the single piece.
19. The bicycle saddle of any of clause 14-17, wherein the first saddle half, the second saddle half, and the mounting bracket are subtractively manufactured from a custom wing blank based on the adjustments made to the adjustable saddle.
20. The bicycle saddle of any of clauses 14-19, wherein a front spacing between front ends of the first saddle half and the second saddle half and a back spacing between back ends of the first saddle half and the second saddle half are based on sit bone width measurements and riding position preferences of a specific rider.

Any methods disclosed herein may comprise one or more steps or actions for performing the described method. The method steps and/or actions may be interchanged with one another. In other words, unless a specific order of steps or actions is required for proper operation of the embodiment, the order and/or use of specific steps and/or actions may be modified.

Reference throughout this specification to "an embodiment" or "the embodiment" means that a particular feature, structure or characteristic described in connection with that embodiment is included in at least one embodiment. Thus, the quoted phrases, or variations thereof, as recited throughout this specification are not necessarily all referring to the same embodiment.

Similarly, it will be appreciated that in the above description of embodiments, various features are sometimes grouped together in a single embodiment, figure, or description for the purpose of streamlining the disclosure. This method of disclosure, however, is not to be interpreted as reflecting an intention that any claim in this or any application claiming priority to this application require more features than those expressly recited in that claim. Rather, as the following claims reflect, inventive aspects lie in a combination of fewer than all features of any single foregoing disclosed embodiment. Thus, the claims following this Detailed Description are hereby expressly incorporated into this Detailed Description, with each claim standing on its own as a separate embodiment. This disclosure includes all permutations of the independent claims with their dependent claims.

Recitation in the claims of the term "first" with respect to a feature or element does not necessarily imply the existence of a second or additional such feature or element. Only elements recited in means-plus-function format are intended to be construed in accordance with 35 U.S.C. §112 Para. 6. It will be apparent to those having skill in the art that changes may be made to the details of the above-described embodiments without departing from the underlying principles of the disclosure.

While specific embodiments and applications of the present disclosure have been illustrated and described, it is to be understood that the disclosure is not limited to the precise configuration and components disclosed herein. Various modifications, changes, and variations which will be apparent to those skilled in the art may be made in the arrangement, operation, and details of the methods and systems of the present disclosure herein without departing from the spirit and scope of the disclosure.

## Claims

1. A method of manufacturing a bicycle saddle, the method comprising:
obtaining saddle measurements pertinent to a specific rider; and either:
(A) using the saddle measurements to additively manufacture a saddle base comprising:
a first saddle half; and
a second saddle half;
wherein additively manufacturing the saddle base comprises positioning the second saddle half relative to the first saddle half as indicated by the saddle measurements; or
(B) subtractively manufacturing a custom wing from a custom wing blank based on the saddle measurements; and
mounting a first saddle half and a second saddle half to the custom wing so that the bicycle saddle matches the saddle measurements.

2. The method of claim 1, wherein the method comprises (A).

3. The method of claim 2, further comprising adjusting components of an adjustable saddle relative to each other to accommodate a rider to create an adjusted saddle;
wherein obtaining the saddle measurements comprises obtaining the saddle measurements from the adjusted saddle.

4. The method of claim 2 or claim 3, wherein additively manufacturing the saddle base further comprises forming a mounting bracket integrally with the first saddle half and the second saddle half, wherein the mounting bracket comprises:
a front support rib extending across a width of a front portion of the saddle base;
a middle support rib extending across a width of a middle portion of the saddle base;
and
one or more back support ribs extending across a width of a back portion of the saddle base.

5. The method of any of claims 2-4, wherein obtaining the saddle measurements comprises identifying one or more of a front spacing, a rear spacing, and a saddle angle.

6. The method of any of claims 2-5, wherein obtaining the saddle measurements comprises obtaining a sit bone impression by seating the specific rider on a compressible material and using a measurement obtained from the sit bone impression to obtain an approximate sit bone width for the specific rider.

7. The method of claim 6, wherein obtaining the saddle measurements further comprises:
obtaining additional information from the specific rider including at least one of: a preferred riding position, a bike application type, a specific morphology, a medical condition, and a gender; and
cross-referencing the approximate sit bone width with the additional information to arrive at recommended saddle measurements.

8. The method of claim 1, wherein the method comprises (B).

9. The method of claim 8, further comprising adjusting components of an adjustable saddle relative to each other to accommodate a rider to create an adjusted saddle;
wherein obtaining the saddle measurements comprises obtaining the saddle measurements from the adjusted saddle.

10. The method of claim 8 or claim 9, further comprising, prior to subtractively manufacturing the custom wing, using the saddle measurements to select the custom wing blank from a plurality of differently sized custom wing blanks.

11. The method of any of claims 8-10, wherein subtractively manufacturing the custom wing comprises forming one or more keyholes in the custom wing, wherein the one or more keyholes are positioned to establish locations for the first saddle half and the second saddle half relative to the custom wing.

12. The method of any of claims 8-11, wherein mounting the first saddle half and the second saddle half to the custom wing comprises:
engaging one or more connection features of the first saddle half with corresponding keyholes in the custom wing; and
engaging one or more connection features of the second saddle half with corresponding keyholes in the custom wing.

13. The method of any of claims 8-12, further comprising positioning a thin hard inner between the custom wing and at least one of the first saddle half and the second saddle half.

14. The method of any of claims 8-13, further comprising securing the first saddle half and the second saddle half to the custom wing using an adhesive.

15. A bicycle saddle obtainable by or obtained by the method of any of claims 1-14.
